# EUROPEAN PATENT SPECIFICATION

(11) **EP 4 540 174 B1**
(45) Date of publication and mention of the grant of the patent: **09.12.2026**
(21) Application number: 23729438.4
(22) Date of filing: 09.06.2023
(51) Int. Cl.: B67C 3/20, B67C 3/24, H01M 50/609

(54) **FILLING METHOD, FILLING LINE AND FILLING KIT FOR FILLING CONTAINERS WITH VISCOUS FLUIDS, PARTICULARLY FOR FILLING BATTERIES WITH ELECTROLYTE**
FÜLLVERFAHREN, FÜLLLINIE UND FÜLLKIT ZUM FÜLLEN VON BEHÄLTERN MIT VISKOSEN FLÜSSIGKEITEN, INSBESONDERE ZUM FÜLLEN VON BATTERIEN MIT ELEKTROLYT
PROCÉDÉ DE REMPLISSAGE, CONDUITE DE REMPLISSAGE ET KIT DE REMPLISSAGE POUR REMPLIR DES CONTENANTS AVEC DES FLUIDES VISQUEUX, EN PARTICULIER POUR REMPLIR DES BATTERIES AVEC DE LÉLECTROLYTE

(30) Priority: 20.06.2022 IT 202200012958
(43) Date of publication of application: 23.04.2025
(73) Proprietor: I.M.A. INDUSTRIA MACCHINE AUTOMATICHE S.P.A. IN SIGLA IMA S.P.A., 40064 Ozzano dell'Emilia (IT)
(72) Inventor: FURLOTTI, Filippo, 43029 TRAVERSETOLO, Località Cazzola (IT)
(74) Representative: Modiano, Micaela Nadia
(86) International application number: PCT/EP2023/065507
(87) International publication number: WO 2023/247217

(56) References cited:
- EP-A1- 2 615 047
- EP-A1- 2 848 576
- EP-A1- 3 450 361
- DE-C- 959 801
- US-A- 3 779 292

## Description

The present invention relates to a filling method and a filling line for filling containers with a fluid that is slowly introduced into the containers, for example with a dense fluid, a semi-liquid (a gel) or with any fluid against which the container offers resistance to being filled, for example because the container is provided internally with a plurality of interspaces to be filled with the fluid. In particular, the invention is suitable for filling batteries with an electrolyte.

In the sector of filling containers with liquids or semi-liquids, the filling station can be required to operate at a preset production speed so that the filling station can be inserted in a production line that operates at that speed.

However, it is not always possible to achieve determined, particularly high production speeds, for example in the order of hundreds of containers per minute, in cases where the actual time needed to fill the container with the necessary volume of fluid is significantly longer than the time that is theoretically necessary in order to satisfy the production speed required of the filling station.

For example, this difference between the actual filling time and the theoretical time required can arise when the filling fluid is dense and/or viscous (for example if it is semi-liquid) and/or when the container contains internal interspaces that need to be filled. A typical case is that of batteries, which need to be filled with an electrolytic solution and which contain electrodes that divide the internal volume of the container into various interspaces, sometimes very thin.

An example of such batteries are cylindrical cells, which comprise a cylindrical container body containing films (anode, cathode and insulator) rolled in a spool, and for which the time to fill with an electrolytic solution is in the order of a few minutes, for example 10 minutes.

If the production line requires a filling speed of N containers per minute, then a filling station of the line would need to have a number of filling faucets equal to N * t, where "t" is the time necessary for filling the individual container, expressed in minutes. In the example of batteries, in order to fill 300 batteries per minute when filling with the electrolytic solution requires 10 minutes per container, then 3000 faucets would be needed, for example arranged around a continuously-rotating filling carousel.

Clearly such a solution requires a considerable use of space, as well as a cost and a complexity that are so high that, effectively, they make it impossible to provide high-speed filling stations when the time necessary for filling the container is high, in particular in the order of a few minutes.

Document EP 2 848 576 A1 discloses a piston filling device and a method comprising the features of the preamble of claim 1. Documents EP 3 450 261 A1 and EP 2 615 047 A1 disclose the use of pucks for holding and transporting containers in container handling machines.

The aim of the present invention is to provide a filling method and a filling line that are capable of improving the prior art in one or more of the above mentioned aspects.

Within this aim, an object of the invention is to fill containers at a high rate, in particular in the order of hundreds of containers per minute (for example between 100 and 600 containers per minute), even though the time necessary for filling the individual container is high, in particular in the order of a few minutes (for example between 2 and 10 minutes).

A specific object of the invention is to execute the above mentioned filling while keeping the space occupation of the filling station substantially small, for example by using filling carousels of diameter and number of faucets that are common in the filling carousel sector (for example, in the order of a few tens of faucets).

Another object is to enable the line to be used for filling with different volumes of fluid, based for example on the capacity of the container to be filled or on the type of fluid.

Furthermore, the present invention sets out to overcome the drawbacks of the background art in a manner that is alternative to any existing solutions.

Another object of the invention is to provide a filling method and a filling line that are highly reliable, easy to implement and of low cost.

This aim and these and other objects which will become better apparent hereinafter are achieved by a method according to claim 1, optionally provided with one or more of the characteristics of the dependent claims.

The aim and the objects of the invention are likewise achieved by a filling line according to claim 10, optionally provided with one or more of the characteristics of the dependent claims, and by a filling kit according to claim 16.

In brief, a plurality of filling units, each one being suitable to contain the volume of fluid necessary to fill a respective container, are recirculated in a filling line along a path, preferably closed, along a portion of which they are temporarily rendered integral with respective containers and fill such containers autonomously at a buffer station of the line, in a longer time than the time necessary to fill each one of said filling units with the same volume of fluid. The filling units can, therefore, be filled at a filling station in the same line at the preset production speed that the line needs to have. Downstream of the buffer station, the emptied filling units are separated from the respective filled container and can be filled with a new volume of fluid, at the above mentioned filling station, in order to transfer such volume, again autonomously, to another, respective container at the buffer station.

An "offline" filling kit can be defined substantially by the filling unit together with a puck for conveying the container and with mutual fixing means that render the filling unit and the puck temporarily integral.

Further characteristics and advantages of the invention will become better apparent from the description of preferred, but not exclusive, embodiments of the invention, illustrated by way of non-limiting example in the accompanying drawings wherein:

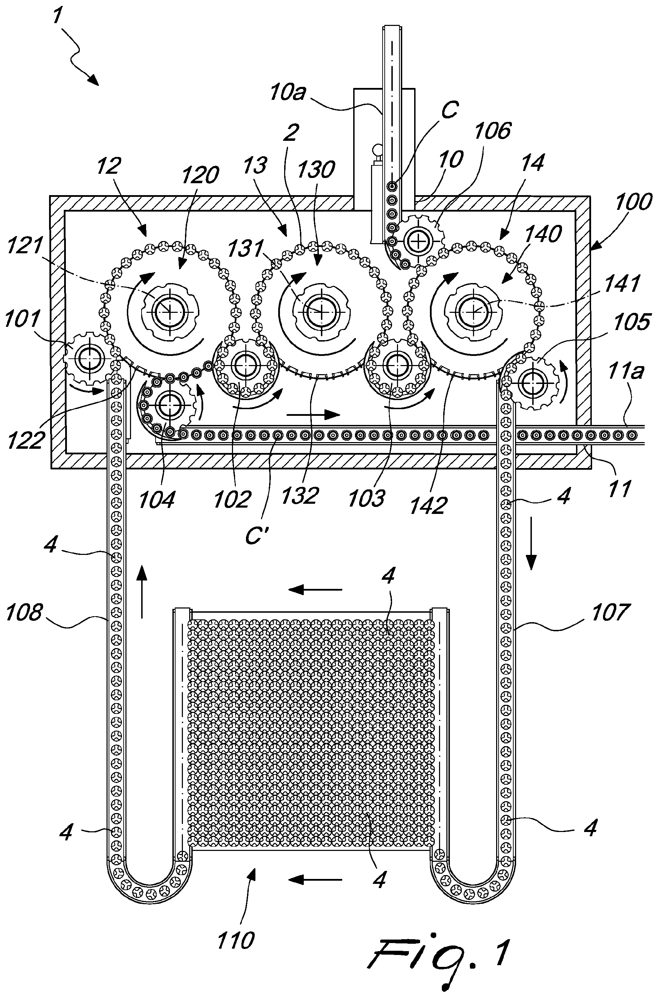

- Figure 1 shows a filling line according to the invention;

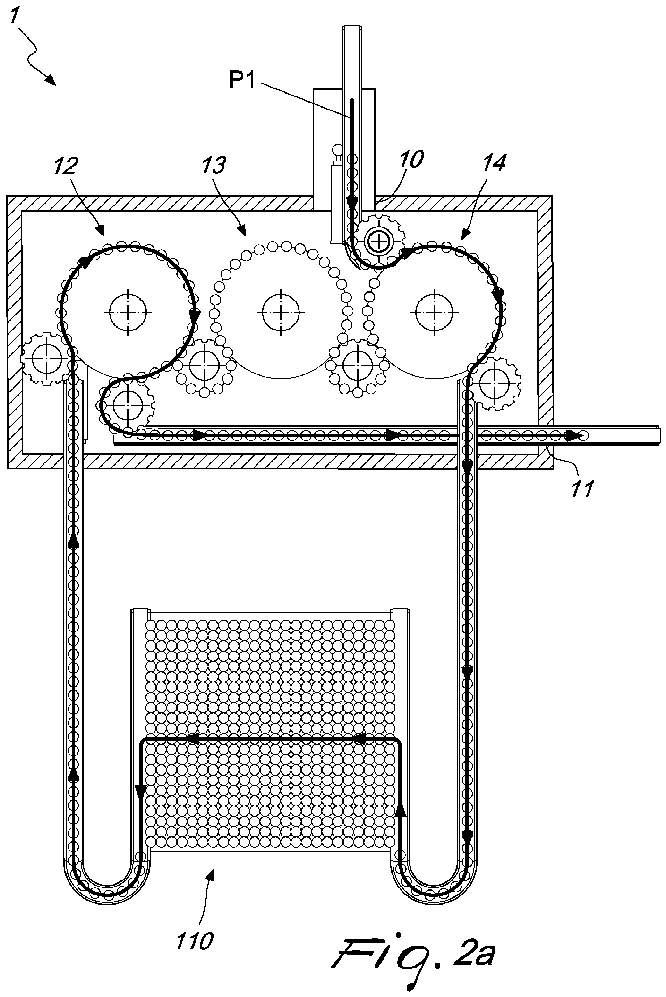

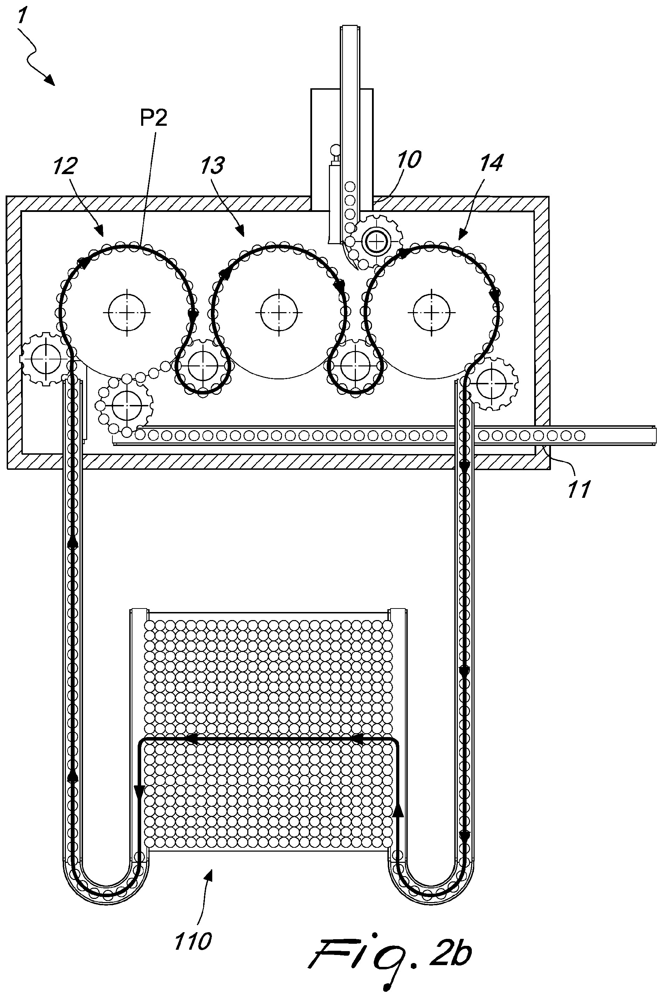

- Figures 2a-2b show respectively the path of the containers and the path of the filling units in the line of Figure 1;

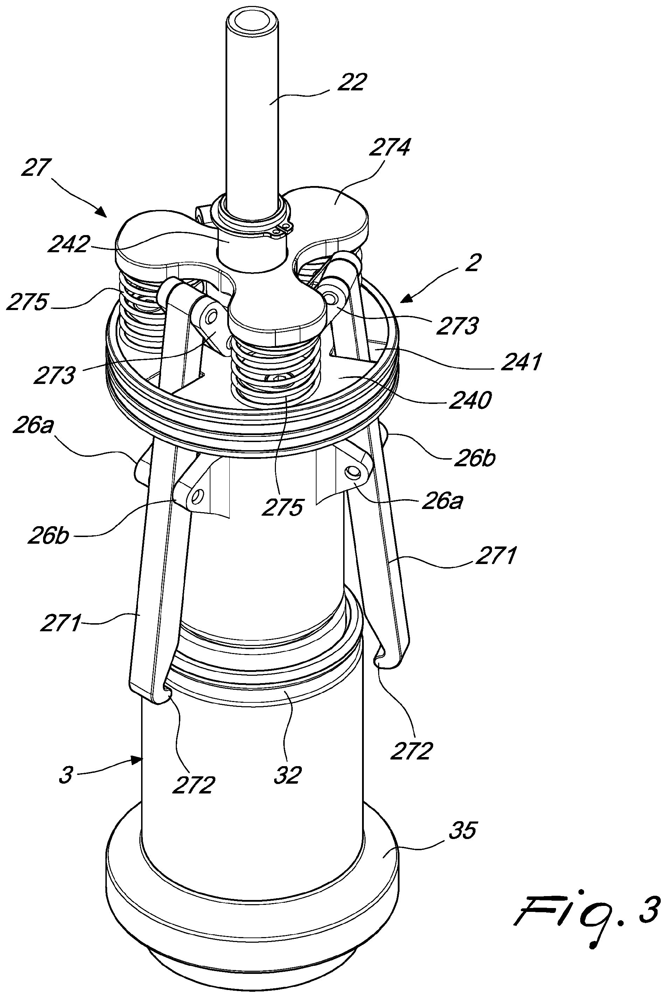

- Figure 3 is a perspective view of a filling kit according to a first embodiment of the invention;

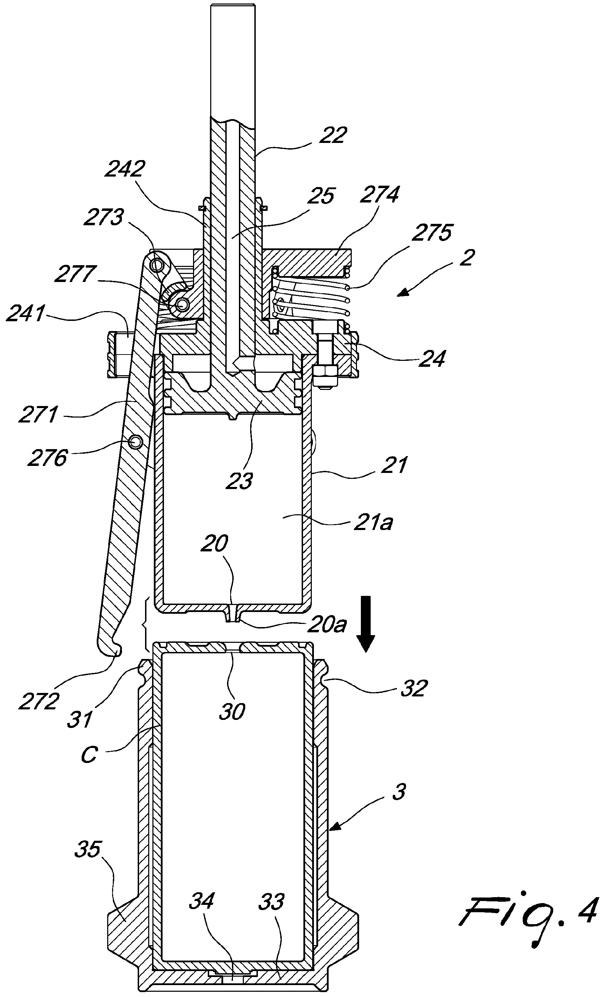

- Figure 4 is an axial cross-sectional view of the kit of Figure 3;

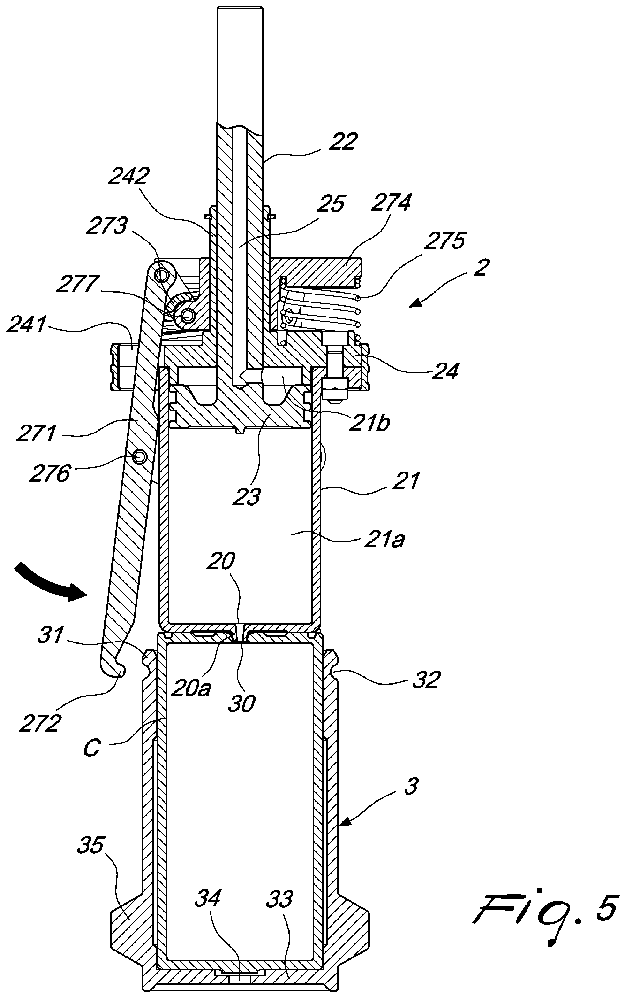

- Figure 5 corresponds to the previous figure but with the filling unit while being fixed to the puck that accommodates the container;
- Figure 6 corresponds to the previous figure but with the fixing means activated to form a unitary assembly according to the first embodiment of the invention;
- Figure 7 is a perspective view of the unitary assembly at the end of the filling of the container;
- Figure 8 is another perspective view of the unitary assembly of the previous figure;
- Figure 9 is an axial cross-sectional view of the unitary assembly of Figure 7;

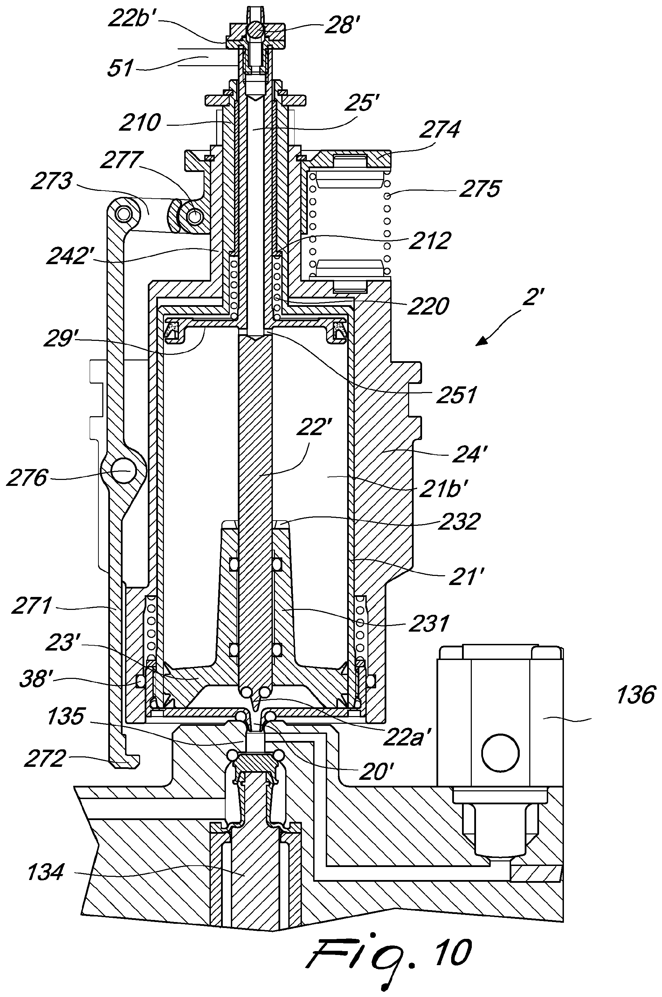

- Figure 10 is an axial cross-sectional view of the filling unit of a kit according to a second embodiment of the invention, when it is associated with a filling nozzle;

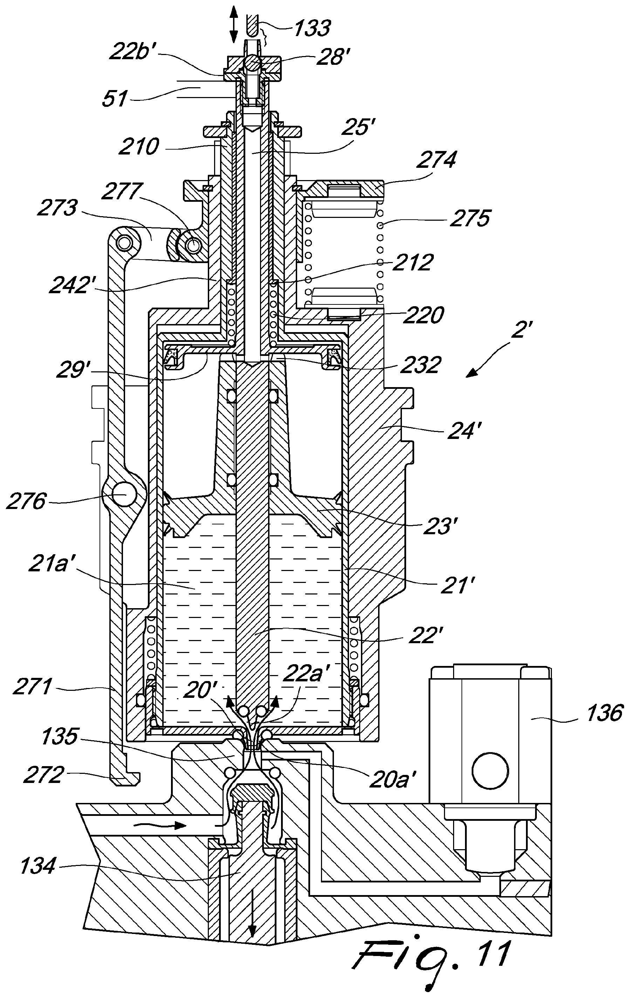

- Figure 11 is a cross-sectional view of the filling unit of the previous figure during the filling thereof;

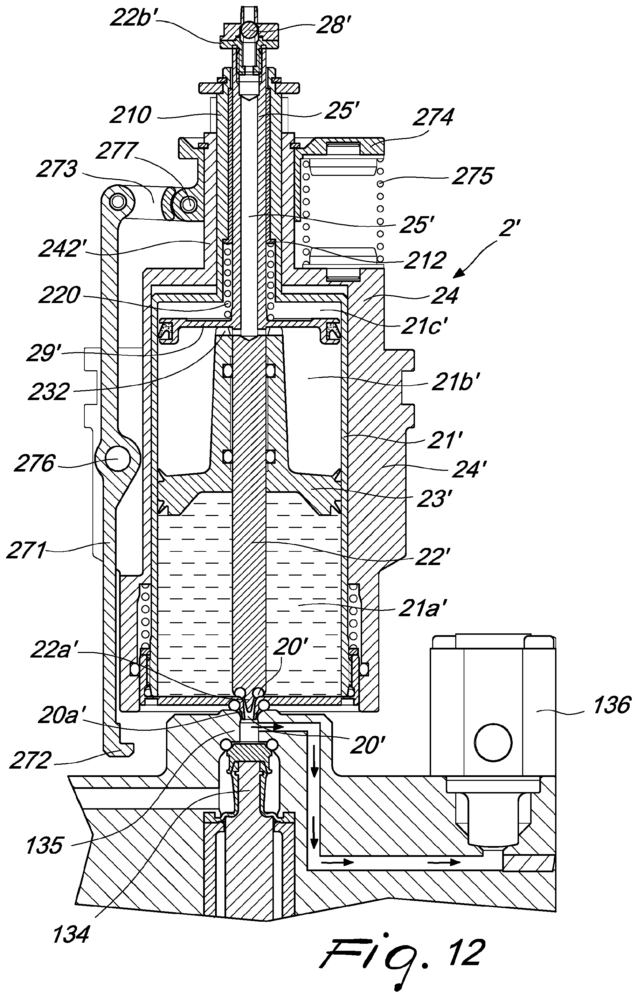

- Figure 12 is a cross-sectional view of the filling unit of the previous figure at the end of the filling thereof;

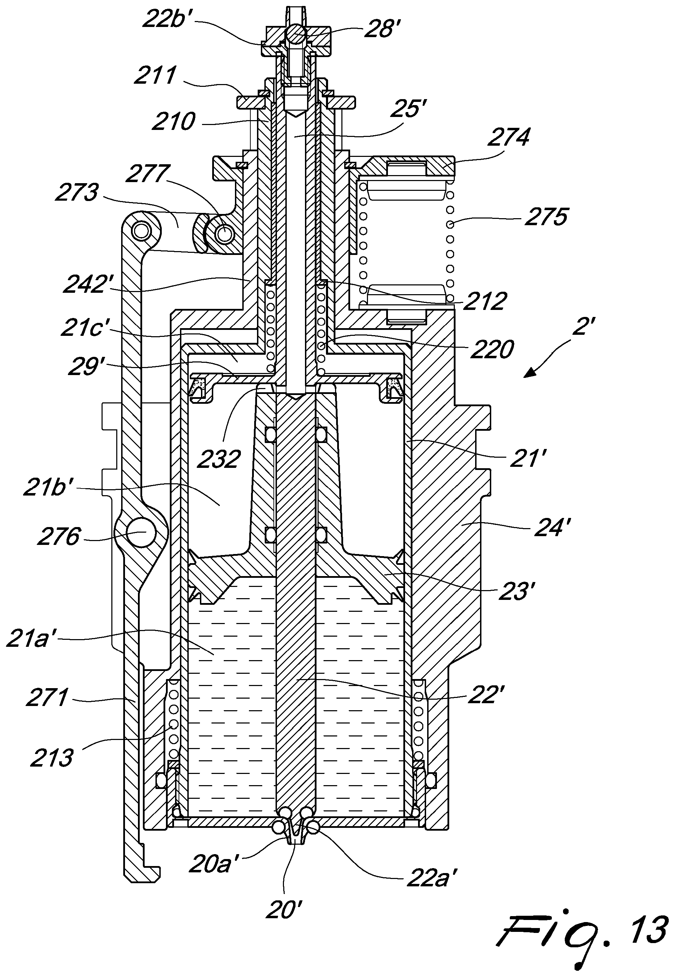

- Figure 13 is an axial cross-sectional view of the filling unit which is received from the coupling station in the second embodiment of the invention;
- Figure 14 is an axial cross-sectional view of the unitary assembly according to the second embodiment of the invention, during the creation of the vacuum in the container;
- Figure 15 is a cross-sectional view of the unitary assembly of the previous figure at the end of the step of creating the vacuum;
- Figure 16 is a cross-sectional view of the unitary assembly of the previous figure during the injection of gas under pressure into the filling unit;
- Figure 17 is a cross-sectional view of the unitary assembly of the previous figure at the end of the filling of the container and before the step of separation from the filling unit.

With reference to the figures, a filling line according to the invention, generally designated by the reference numeral 1, comprises a first path P1 for conveying a series of containers to be filled C, which are conveyed, preferably with continuous motion, from an inlet 10, where containers C to be filled enter the line, to an outlet 11, from which containers C filled with a predetermined volume of fluid (herein also designated C') exit from the line 1. The inlet 10 and the outlet 11 are respectively passed through by linear conveyors 10a and 11a which are per se known, for example belt conveyors, chain conveyors or screw feeders.

The filling fluid can be any liquid or semi-liquid, and may be dense and/or viscous. The invention is however particularly suitable for filling with fluids that are introduced slowly into the container C, owing to the particular density/viscosity of the fluid or owing to the presence of obstacles and/or interspaces inside the container that slow down its filling. The density might be, for example, between 1.2 and 1.3 g/cm³.

The container C can also be of any type, but in particular it can be of the type that comprises inside it a plurality of obstacles, cells and/or interspaces that slow down the filling of the container with the fluid.

In the preferred embodiments of the invention, the fluid is an electrolyte for batteries, for example an electrolytic gel, while the container C supplied at the inlet 10 is a container for batteries (for example, for cylindrical, prismatic, or pouch cells) which internally has anode and cathode sheets and optionally other materials and components that take up space inside the container C, obstructing what would otherwise be a rapid introduction of the electrolyte. The container C can have a cylindrical shape with a circular base, as in the case shown in the drawings, or a prismatic or pouch shape, in which the sheets of anode, cathode and other materials (for example insulators), not shown, are rolled to form a single multilayer roll inside the container C.

In the preferred embodiments of the invention, each container C along the first path P1 is advantageously accommodated in a respective transport puck 3 or 3', which is a beaker-like body that is open above at a rim 31 or 31' thereof so as to allow the container C to be slid (automatically) into the puck through the rim 31, 31', leaving an upper inlet 30 thereof exposed, and to be stabilized during the various operations along all of the first conveyance path P1. The puck 3, 3' is preferably suitable to remain integral with the container C along all of the first path P1, by interference-fit coupling and/or by form-fit coupling with the external surface of the container C, but leaving preferably at least one lateral interspace 36, 36' in order to allow the creation of a vacuum in the container C before its filling and/or in order to allow the washing of the container C before and/or after it is filled with the fluid. For example, the puck 3, 3' can also have a substantially cylindrical shape.

The puck 3, 3' can have on its lateral surface a fixing surface, for example in the form of at least one depression 32, 32' which, in the embodiment illustrated, is coaxial with the central axis of the puck and advantageously annular. The fixing surface 32, 32' is preferably arranged proximate to the upper rim 31, 31' of the puck 3, 3'.

In the second embodiment of the invention, the upper rim 31' of the puck 3' can also comprise a first gasket 37', for example a lip gasket, which is suitable to provide a gas-tight seal against the filling unit 2', for example an axial seal, as will be described below with reference to the second embodiment.

On the end axially opposite to the rim 31, 31' the puck 3, 3' has a base 33, 33' which is suitable to give internal support to the container C and/or in any case to provide a resting surface outward, used for conveying the puck - and therefore the container C - along at least the first conveyance path P1 or some sections thereof. The base 33, 33' can have at least one through hole 34, 34', for example in the center, to provide an optional inlet for washing the container C after it is filled or an optional vent during the insertion/removal of the container C with respect to the puck 3, 3' and/or during the creation of a vacuum in the container C before it is filled, described below.

The base 33 of the puck 3 can optionally have an axial distance from the rim 31 that is less than the axial dimension of the container C so as to optionally leave a portion of the lateral surface of the container C exposed when the latter is slid completely into the puck 3. In the second embodiment of the invention, the axial distance between the base 33' and the rim 31' is substantially equal to the height of the container C and/or such that the latter does not axially protrude outside the puck 3'.

The lateral surface of the puck 3, 3' can have an enlarged radial portion 35, 35' which substantially acts as a radial spacer when the pucks are side-by-side, in particular on the buffer station 110 described below.

The filling line 1 also comprises a second path P2 for conveying a series of filling units 2 or 2', according to which embodiment of the line is considered. The filling units 2, 2' are substantially faucets that can move along the second path P2, which is preferably a closed path and in any case is at least partially superimposed on the first conveyance path P1 so that, in the superimposed segments, the filling units 2, 2' and the respective containers C are mutually superimposed in an axial direction, i.e. parallel to a (vertical) direction that is substantially perpendicular to the floor on which the line 1 is installed. The filling units 2, 2' are conveyed, preferably, with continuous motion, along at least some of the second path P2, in particular in the production assembly 100.

Each filling unit 2, 2' substantially comprises a syringe-like body, provided with a reservoir 21, 21' which is adapted to contain, in an internal first chamber 21a, 21a' thereof, the predetermined volume of fluid to be transferred to a respective container C. To this end, this reservoir 21, 21' comprises a bottom opening 20, 20' for the passage of the fluid, which can have, although not necessarily, a diameter in the order of a few millimeters (for example 2-3 mm) and which can advantageously be connected to the upper inlet 30 of the respective container C, for example by making the opening 20, 20' with a spout 20a, 20a' protruding outward from the reservoir 21, 21'.

In the first embodiment illustrated, the reservoir 21 is associated with a plunger 22, which can move axially with respect to the reservoir 21 by way of a guide body 24 which is fixed to the reservoir 21, for example, with a flanged coupling as in the embodiment shown. In particular, the guide body 24 of the plunger 22 is provided with a tubular guide 242 which is coaxial, but external, to the reservoir 21 and in which the plunger 22 is associated so that it can slide.

The plunger 22 comprises a piston 23 which is fixed thereto or integrated therewith, and which can slide with a gas-tight seal along the internal side walls of the reservoir 21 and divides the internal space of the reservoir into the first chamber 21a for containing the fluid to be transferred to the container C and into a second chamber 21b for containing a gas under pressure (for example air) which is suitable to move, through an expansion thereof, the piston 23 in a direction that expands the volume of the second chamber 21b and, simultaneously, decreases the volume of the first chamber 21a of the reservoir 21, in this manner making the fluid exit from the opening 20. To this end, the plunger 22 comprises an internal coaxial channel 25 which is connected to the second chamber 21b and which, at the other end along the axis of the plunger 22, is closed with a one-way valve 28, which can be opened mechanically only in order to introduce or vent the gas in the second chamber 21b of the reservoir 21.

In the second embodiment illustrated, the reservoir 21' of the filling unit 2' is associated with an internal stem 22', which can move axially with respect to the reservoir 21' and passes through a guide body 24' associated externally with the reservoir 21'.

The guide body 24' of the second embodiment is a substantially cylindrical rigid body fitted over the reservoir 21' so that the reservoir 21' is completely accommodated inside the guide body 24' and is slideably guided inside the latter. In particular, the guide body 24' is provided with a tubular guide 242' which is coaxial to and outside of a tubular projection 210 of the reservoir 21', in which projection the stem 22' is slideably associated. The tubular projection 210 of the reservoir 21' passes through the tubular guide 242' until it protrudes axially outside such tubular guide 242'.

The tubular projection 210 further comprises a hold 211 which protrudes radially from the portion of the projection 210 that is outside the guide body 24'. The hold 211 is suitable to be grasped by a mechanical lifting element 52, for example a cam surface in a fixed position with respect to a filling carousel 130 (described below), or a lifting gripper which is integral in rotation with the filling carousel 130.

The function of the stem 22' is to shut off the opening 20' of the reservoir 21' and, to this end, it comprises a plugging end 22a' which is suitable to obstruct the opening 20'. By contrast, the opposite end of the stem 22' comprises a radial prominence 22b' which is suitable to be engaged on a means for lifting the stem 22', for example another cam surface 51 arranged in a fixed position around a coupling carousel 140 (described below) or another lifting gripper which is integral in rotation with the coupling carousel 140.

A first piston 23' is slideably fitted over the stem 22' so as to be able to move axially along the latter and is suitable to provide a gas-tight seal against the internal surface of the reservoir 21'.

The stem 22' further comprises a second piston 29' which is fixed thereto or integrated therewith, is coupled in a gas-tight manner to the internal surface of the reservoir 21' and is positioned along the stem 22' so that the first piston 23' is interposed between the second piston 29' and the bottom of the reservoir 21' where the opening 20' is provided.

In this way, the following are defined in the reservoir 21': a substantially cylindrical first chamber 21a' between the bottom of the reservoir 21' and the first piston 23', suitable to contain the fluid to be transferred to the container C; a substantially cylindrical second chamber 21b' between the two pistons 23' and 29', suitable to contain a gas under pressure (for example, air under pressure); and a substantially cylindrical third chamber 21c' between the second piston 29' and the tubular projection 210 of the reservoir 21', suitable to allow an axial stroke of the stem 22' away from the opening 20' of the reservoir 21'. In other words, the volume of the third chamber 21c' is reduced or substantially eliminated when the plugging end 22a' of the stem 22' is axially separated from the opening 20' in order to free it.

The sliding coupling between the first piston 23' and the stem 22' allows the gas under pressure inside the second chamber 21b', while the gas expands, to move the two pistons 23' and 29' away from each other, expanding the volume of the second chamber 21b' and decreasing the volumes of the first chamber 21a' and optionally of the third chamber 21c' of the reservoir 21'.

To this end, the stem 22' comprises an internal coaxial channel 25' which is connected to the second chamber 21b' and which, at the other end along the axis of the stem 22', is closed with a one-way valve 28', which can be opened mechanically only in order to introduce or vent the gas under pressure in the second chamber 21b' of the reservoir 21'.

In the second embodiment illustrated, the inner channel 25' of the stem 22' leads into the second chamber 21b' through radial ducts 251, which are arranged preferably adjacent to the lower face of the second piston 29'. The first piston 23', which advantageously comprises a sleeve 231 for guiding the piston 23' along the stem 22', is provided on the top of the sleeve 231 with one or more channels 232 for the passage of the gas under pressure, which are suitable to not obstruct the communication of the second chamber 21b' with the channel 25', in particular, when the first piston 23' is in (end stop) abutment against the second piston 29', i.e. when the first chamber 21a' is completely filled with a volume of fluid to be transferred to the container C or the volume of the second chamber 21b' is minimized.

The stem 22' is also advantageously loaded elastically toward the opening 20' so as to keep it closed, for example using a first contrast spring 220 which acts between the second piston 29' and an abutment 212 located inside the tubular projection 210 of the reservoir 21' and outside the stem 22'.

A second radial sealing gasket 38' can be interposed between the guide body 24' and the reservoir 21'.

At least one second contrast spring 213 (for example helical) can be located between the reservoir 21' and the guide body 24', so as to elastically load the reservoir 21' axially away from the guide body 24'.

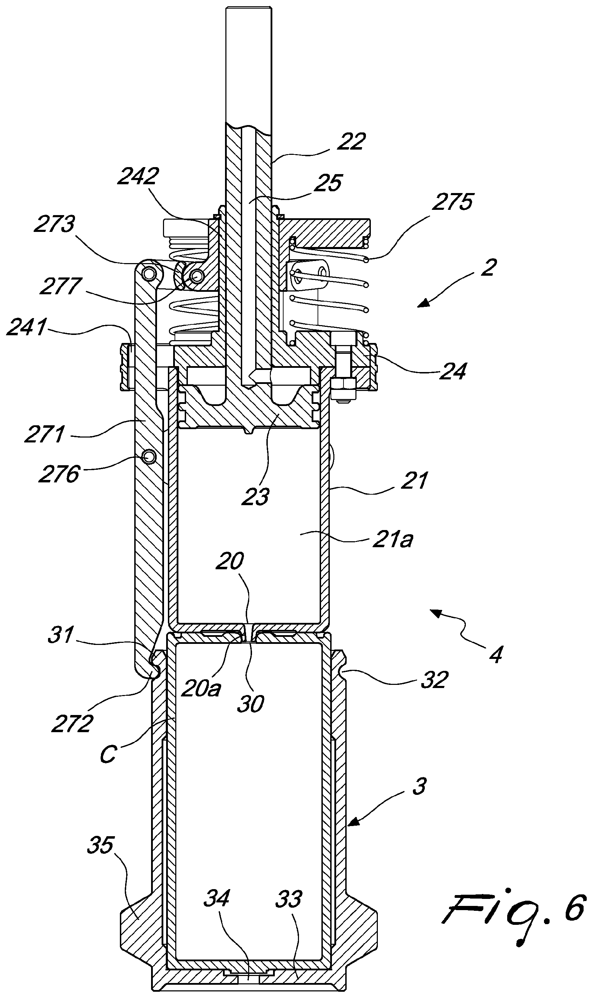

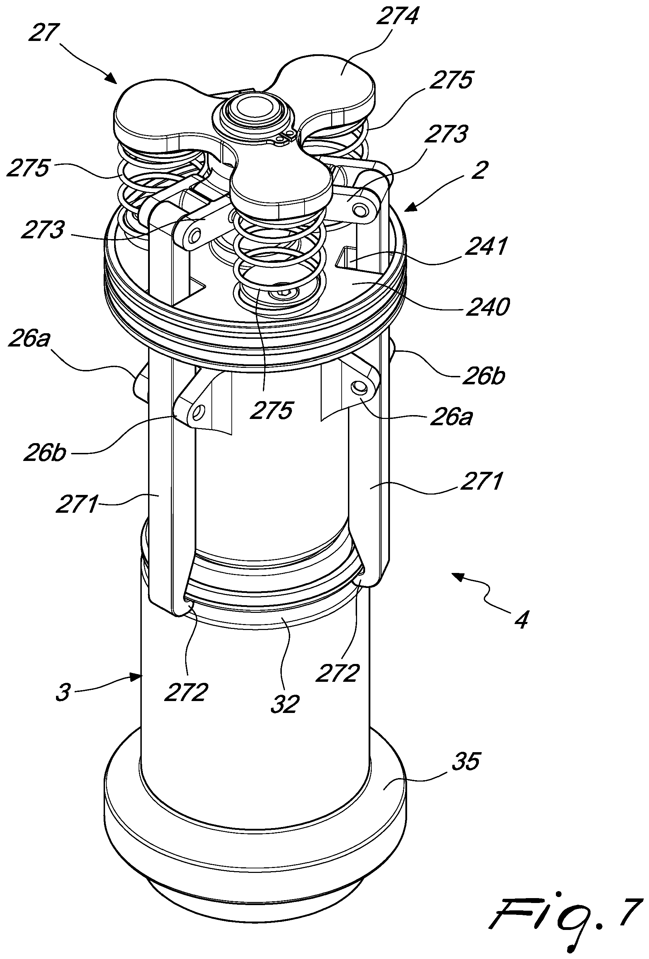

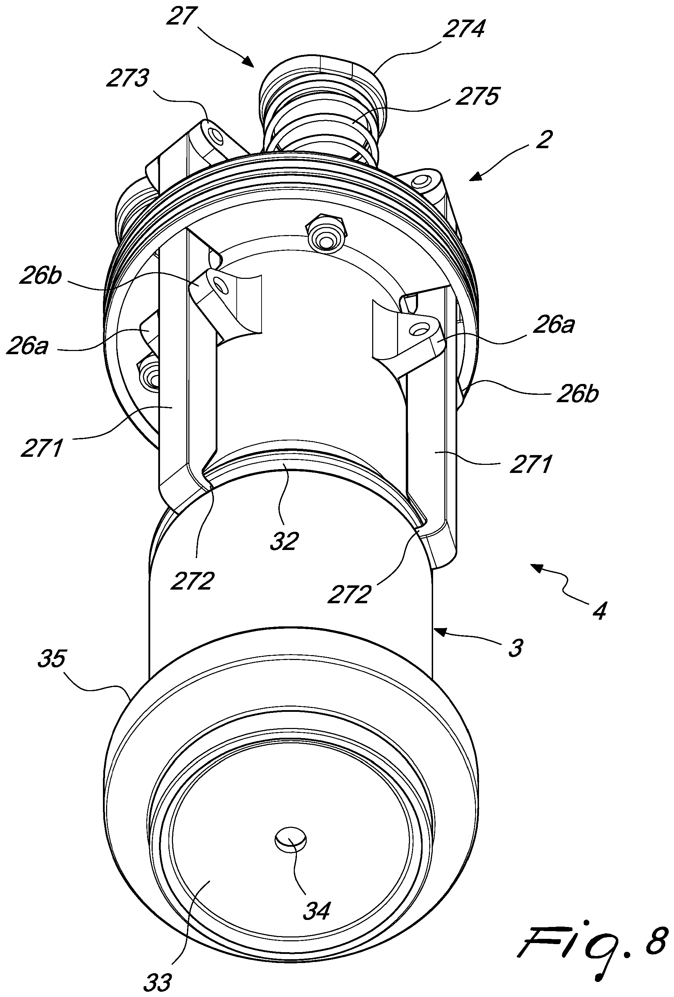

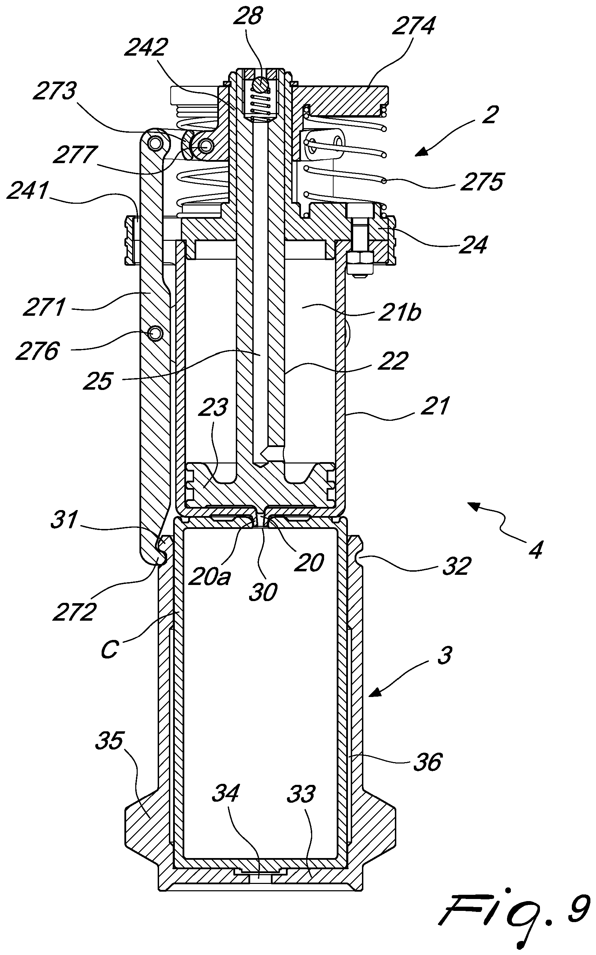

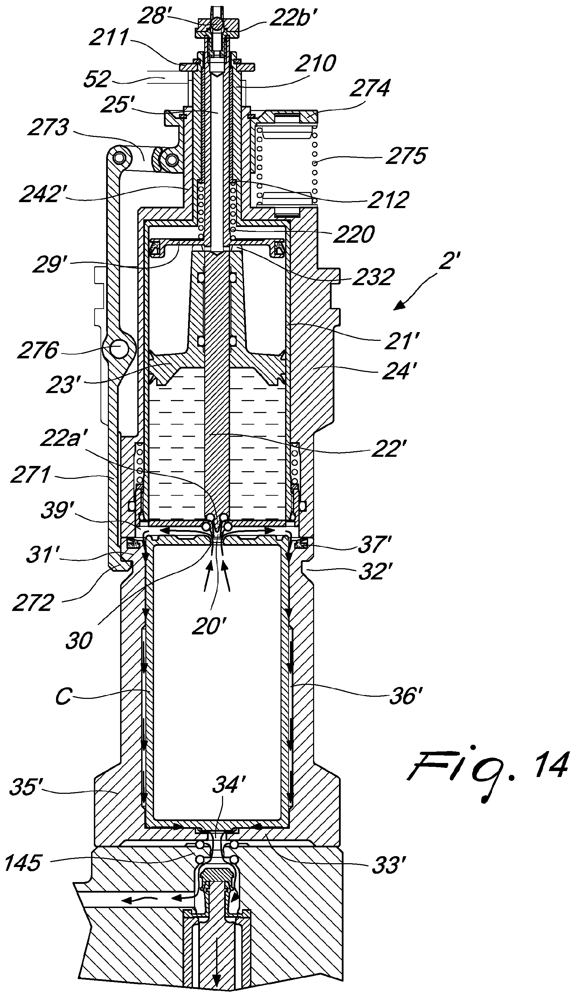

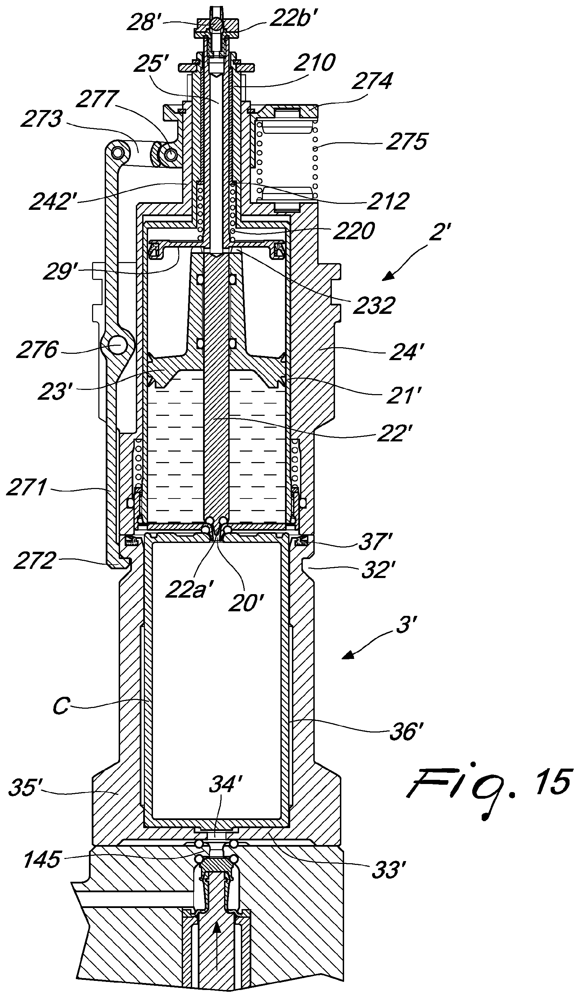

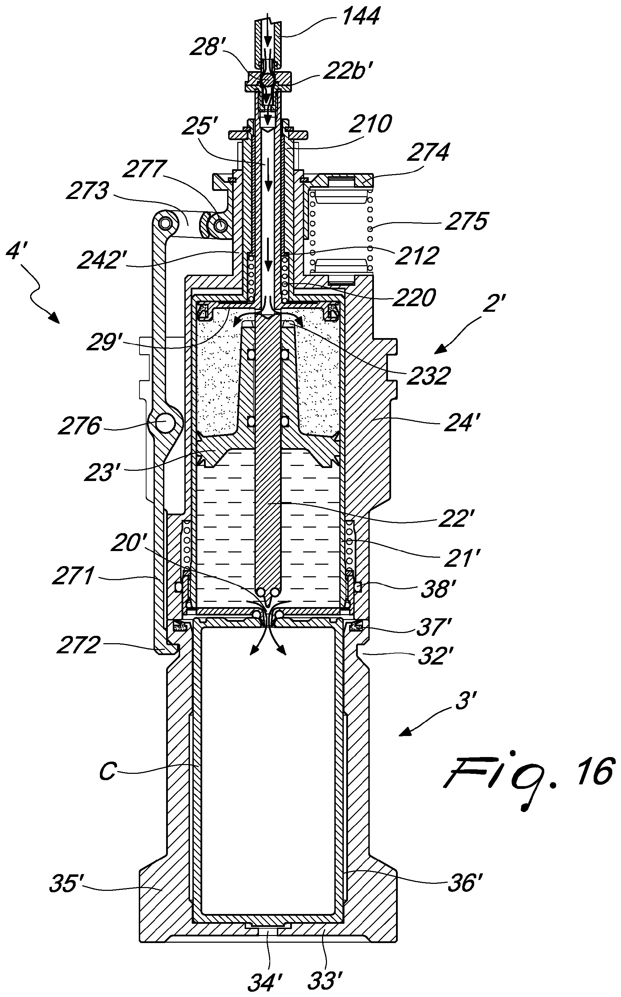

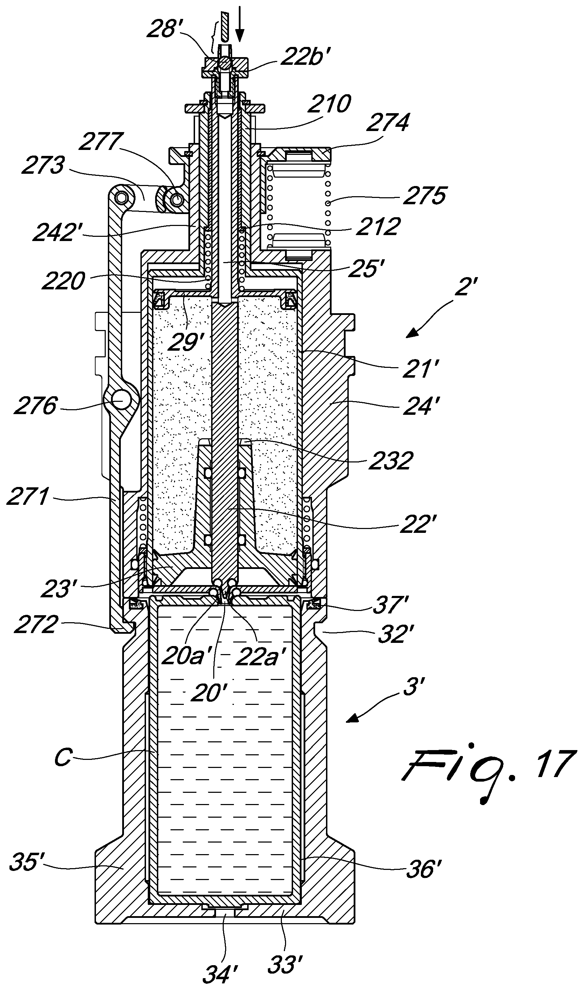

The kit formed by the filling unit 2 or 2' and by the respective puck 3 or 3' also comprises means for removably fixing 27, which are suitable to render the filling unit 2, 2' and the container C temporarily mutually integral, and more particularly the filling unit 2, 2' and the puck 3, 3', if present, temporarily mutually integral, and thus form a unitary assembly 4 or 4' such as, for example, the one shown in Figures 6-9 or 14-17.

The means for removably fixing 27 (the components of which are indicated, in the figures, with the same reference numeral in the two embodiments illustrated, given their similarity) are preferably associated with each filling unit 2 or 2', as in the embodiments illustrated, but they can, alternatively, be provided on the puck 3 or 3', if any.

The means for removably fixing 27 can be provided with one or more claws 271, for example with a grapple formed by a plurality of said claws 271 which can be moved closer to/away from each other about the central axis of the filling unit 2 or 2'.

In other embodiments, not shown, the means for removably fixing can perform the fixing using other snap-acting coupling means, or by interference or by friction (for example, with a threaded coupling).

In the embodiments shown, each claw 271 is a rocker with a fulcrum 276, for example provided on a respective pair of lugs 26a-26b which protrude from the reservoir 21 in the first embodiment, or on the outside of the guide body 24' in the second embodiment, so as to oscillate with respect to a horizontal axis. Each claw 271 can have, at one end, a hook 272 which is suitable to grasp the depression 32, 32' of the puck 3, 3' or, in the embodiments in which the puck 3, 3' is not used, the container C directly.

Each claw 271 can further be pivoted to a respective link rod 273 at the opposite arm with respect to the fulcrum 276. The link rod 273 is in turn hinged on a respective hinge eyelet 277 of a driving slider 274 which can move advantageously in a direction coaxial to the filling unit 2, 2'. For example, in the first embodiment the driving slider 274 is fitted on the tubular guide 242 so as to be able to slide axially toward/away from the reservoir 21, i.e. with respect to the flange of the guide body 24 fixed to the reservoir 21. In the second embodiment, the driving slider 274 is fitted on the tubular guide 242' of the guide body 24', so as to be able to slide axially toward/away from the reservoir 21'.

The mutual approach and spacing apart between the driving slider 274 and the guide body 24 (or 24') along an axial direction result, respectively, in the decoupling and the fixing between the filling unit 2 (or 2') and the puck 3 (or 3'), i.e. respectively the mutual spacing apart and approach of the hooks 272 of the claws 271 along respective axial planes.

Furthermore, elastic return means are preferably provided for keeping the fixing means 27 elastically loaded in a locked condition with respect to the container C or with respect to the puck 3, 3'. This makes it possible to couple by snap action the filling unit 2, 2' with the puck 3, 3' (if any) or with the container C, simply by bringing them together in an axial direction and thus obtaining the unitary assembly 4, 4'.

In the preferred, but not exclusive, embodiments of the invention, in which the fixing means 27 are implemented with a grapple, the locked condition is a condition of minimum mutual distance between the hooks 272 with respect to the central axis of the filling unit 2, 2' while the elastic return means consist substantially of compression springs 275, which are interposed between the driving slider 274 and the guide body 24 or 24' so as to oppose a mutual approach between the driving slider 274 and the guide body 24 or 24'.

The driving slider 274 is advantageously implemented with a multi-lobed plate, so that the compression springs 275 are interposed between respective lobes of the slider 274 and the guide body 24, 24'. The lobes of the driving slider 274 are, furthermore, optionally offset with respect to the eyelets 277 for hinging the link rods 273, so that the region between one lobe and the next does not obstruct the movement away from the guide body 24 or 24' of the pivoting point of the link rods 273 with the respective claw 271.

According to a particular aspect of the invention, the conveyance paths P1 and P2 pass through an assembly 100 for producing filled containers C (filled with a predetermined volume of fluid) and a buffer station 110.

The production assembly 100 comprises a separation station 12, a filling station 13 for filling the filling units, downstream of the separation station (with respect to the direction of transport of the filling units 2, represented by the arrows of the second path P2), and a coupling station 14 downstream of the filling station 13. The stations 12-14 comprise respectively at least one separation carousel 120, at least one filling carousel 130 and at least one coupling carousel 140, each one being able to rotate, preferably with continuous motion, about a central rotation axis 121, 131, 141, respectively.

Each carousel 120, 130, 140 is provided with a plurality of grip means 122, 132, 142 which are arranged along the peripheral region and are suitable to hold at least a respective one of the filling units 2 or 2' (based on the embodiment considered) during the rotation of the respective carousel. The grip means 122, 132, 142 are mutually angularly equidistant about the respective central rotation axis 121, 131, 141 so as to form a circumference. The pitch of the grip means 122, 132, 142 about the respective central rotation axis 121, 131, 141 is preferably equal for all the carousels.

Carousels with grip means along their circumference are per se well known in the bottling sector.

Advantageously, transfer starwheels 101-106 are also provided upstream and downstream of each one of the carousels 120, 130, 140 (with respect to the direction of transport of the path P1 and/or P2). The transfer starwheels 101-106 are also rotating, preferably with continuous motion, about a respective rotation axis parallel to the central rotation axes 121, 131, 141 of the carousels 120, 130 and 140. The transfer starwheels 101-106 can be of the type with receptacles arranged at a constant pitch about the rotation axis of the respective starwheel, in order to entrain the object received from the upstream carousel or conveyor and give it to the downstream carousel or conveyor.

Intermediate transfer starwheels 102 and 103 are interposed, respectively, between the carousels 120 and 130 and between the carousels 130 and 140, in order to transfer at least the filling units 2, 2' between one carousel and the next.

A first inlet starwheel 101 (with respect to the direction of transport of the second path P2) is provided upstream of the separation carousel 120 and downstream of an unloading conveyor 108 for the unitary assemblies 4, 4' which connects the outlet of the buffer station 110 to the production assembly 100 in order to return the unitary assemblies 4, 4' after the corresponding containers C are filled.

A second inlet starwheel 106 is, instead, arranged downstream of the linear conveyor 10a and preferably upstream of the coupling carousel 140 (with respect to the direction of transport of the first path P1), in order to feed the containers C to be filled, optionally accommodated in the respective puck 3, 3', to the coupling carousel 140. Alternatively, the second inlet starwheel 106 can be located upstream of the filling carousel 130 (with respect to the direction of transport of the first path P1).

A first unloading starwheel 105 (with respect to the direction of transport of the second path P2) is provided downstream of the coupling carousel 140 and upstream of a feeding conveyor 107 for feeding the unitary assemblies 4, 4' to the buffer station 110.

A second unloading starwheel 104 is instead arranged (with respect to the direction of transport of the first path P1) downstream of the separation carousel 120, and upstream of the unloading conveyor 11a for unloading the filled containers C', optionally accommodated in the respective pucks 3, 3'.

The first conveyance path P1 and the second conveyance path P2 comprise arcs of circumferences traced ideally by the grip means 122, 142 and, for P2, 132 with their rotation about the respective central rotation axes 121, 141 and 131. Arcs of the first and of the second path P1 and P2 are superimposed preferably along the circumferences traced ideally by the grip means 122 and 142, respectively, of the separation carousel 120 and of the coupling carousel 140.

Other superimposed segments between the first and the second path P1 and P2 are provided along the buffer station 110 and along the feeding 107 and unloading 108 conveyors for the unitary assemblies 4, 4' to/from the buffer station 110.

With a constant advancement speed along the (closed) second path P2, the length of the segment (or arc) of the second path P2 at the filling station 13 is preferably less than the length of the superimposed segments of the first path P1 and the second path P2 at the buffer station 110.

The grip means can be for example in the form of a gripper. In the separation carousel 120, the grip means 122 can be formed by two pairs of grippers superimposed in a direction parallel to the rotation axis 121, so as to grasp respectively the filling unit 2, 2' and the container C (or the puck 3 or 3', if any) of the unitary assembly 4, 4'. Such pairs of grippers can be mutually movable in an axial direction (for example using a jack associated with each pair of superimposed grippers) in order to mutually space the filling unit 2, 2' and the container C apart, or keep them separate from each other.

Advantageously, the grip means 122 or a suitable sloped cam fixed around the central axis 121 of the separation carousel 120 can comprise a thrust surface which is adapted to push the driving slider 274 toward the guide body 24, 24' and so open the claws 271, allowing the separation of the filling unit 2, 2' from the rest of the unitary assembly 4, 4' during the rotation about the axis 121.

Also in the coupling carousel 140, the grip means 142 can be formed by two pairs of grippers superimposed in a direction parallel to the rotation axis 141, so as to grasp respectively the filling unit 2 or 2' and the puck 3 or 3' (or the container C) and such pairs of grippers can be mutually movable parallel to the rotation axis 141 (for example using a respective jack) in order to bring the filling unit 2 or 2' and the respective container C mutually together in an axial direction, so as to form the unitary assembly 4, 4' in which the filling unit 2, 2' and the respective container C are in fluid communication. If the fixing means 27 are of the snap-fit type, as in the example of the grapple illustrated, the unitary assemblies 4, 4' are obtained by simply moving them closer to each other as above.

The coupling station 14 can also comprise means for pressurizing the filling units 2, 2' which are adapted to open the one-way valve 28, 28' of the internal channel 25, 25' and inject a gas under pressure (for example air) into the second chamber 21b, 21b' which would gradually expand the second chamber 21b, 21b' by making the piston 23, 23' translate toward the bottom of the reservoir 21, 21'. The pressurizing means can comprise a plurality of needles 144 which are integral in rotation with the coupling carousel 140 and are coupled to a compressor (not shown) optionally with the interposition of a valve. The needles 144 are arranged mutually equidistant along the peripheral region of the coupling carousel 140, so that each needle 144 is superimposed on a respective grip means 142 and can communicate with the channel 25, 25' of the filling unit 2, 2' of a respective unitary assembly 4, 4' by opening the one-way valve 28, 28' located above said channel. Each pressurization needle 144 and the grip means 142 of the filling unit 2, 2' associated therewith can be mutually moved in a direction parallel to the central rotation axis 141, for example using a jack, so as to move toward/away from each other.

Optionally each one of the grip means 142 of the coupling station 140 can comprise vacuum creation means (for example, a suction nozzle 145) for creating the vacuum in the container C of the unitary assembly 4, 4' prior to receiving the volume of fluid contained in the respective filling unit 2, 2'.

With particular reference to the second embodiment illustrated, a vacuum bell is obtained substantially with the guide body 24' which is coupled end-to-end to the puck 3' with the interposition of the first gas sealing gasket 37'. The unitary assembly 4' has, between the opening 20' of the reservoir 21' and the inlet 30 of the container C, a venting interspace 39', which advantageously has a height that varies with the axial movement of the reservoir 21' with respect to the guide body 24'. The venting interspace 39' is connected to the at least one lateral interspace 36' and the through hole 34' of the puck 3', so as to allow the air inside the container C to escape toward the through hole 34' during the creation of a vacuum in the container C. The second contrast spring 213 is suitable to maintain the volume of the venting interspace 39' at a substantially minimum or nil value.

The volume of the interspace 39' can be mechanically increased by the mechanical lifting element 52 acting on the hold 211 of the tubular projection 210 of the reservoir 21', in contrast with the second spring 213.

The suction nozzle 145, which can be provided on a base of the grip means 142 for supporting the unitary assembly 4', can be coupled with the hole 34' of the puck 3' so as to be able to suck the air out of the container C through its inlet 30 and the interspaces 36' and 39'.

After emptying the air from the container C, the suction by the nozzle 145 causes the axial translational movement of the reservoir 21' toward the container C, in contrast with the second spring 213, and substantially eliminates the volume of the venting interspace 39', with the consequent hermetic coupling between the reservoir 21' and the container C.

With the release of the filling units 2, 2' from the coupling station 14, the one-way valve 28, 28' will be closed, so trapping the gas under pressure in the second chamber 21b, 21b'.

In an alternative embodiment, it is possible to have the pressurizing means at the buffer station 110, by providing thereon a plurality of pressure taps which are connected automatically to the plungers 22 of the unitary assemblies 4 (or to the stems 22' of the unitary assemblies 4') which are in transit at the accumulator 110. The pressure taps are then automatically removed before the unitary assemblies exit from the accumulator 110.

In other alternative embodiments of the invention the plunger 22 can be actuated electrically (for example, with a linear motor) or mechanically (for example, using springs or using inclined cam surfaces that interact with the plunger 22 in order to move it axially while the unitary assembly is moved forward in the buffer station 110) instead of with a pneumatic actuation obtained with the expansion of the gas.

The filling station 13 comprises, at each grip means 132, means for introducing a predetermined volume of fluid into the filling unit, in particular comprising a faucet 134 and a filling nozzle 135 for each grip means 132, which are connected to a main reservoir of the line 1 containing the fluid with which to fill the containers C. The faucets 134 and the filling nozzles 135 are mounted along the peripheral region of the filling carousel 130 so as to rotate integrally with such carousel about its own central rotation axis 131. The filling nozzles 135 can be mounted under the grip means 132 and oriented upward, so as to be able to mate with the bottom opening 20, 20' of the filling unit 2 held by the respective grip means 132. Optionally each filling nozzle 135 can be connected to a venting valve or snift 136.

In transferring the predetermined volume of fluid from the filling nozzle 135 to the filling unit 2, 2' the first chamber 21a, 21a' thereof is gradually filled with the fluid, as a consequence moving the piston 23, 23' in the direction that reduces the volume of the second chamber 21b, 21b'.

The buffer station 110 is arranged along a superimposed segment of the paths P1 and P2 which goes from the coupling station 140 to the separation station 120 and is associated with the feeding 107 and unloading 108 conveyors of the unitary assemblies 4, 4' which respectively feed the unitary assemblies 4, 4' to, and unload them from, the buffer station 110 at the production speed of the line 1.

The buffer station 110 is an accumulator of the FIFO (First In, First Out) type and can be an accumulation table or an assembly of accumulator conveyors. The FIFO accumulator can have one or more moving pads, conveyor belts, motorized roller conveyors or sliding surfaces, optionally arranged so as to form a serpentine route and in any case a route suitable to accumulate a (large) number of unitary assemblies 4 or 4' (in particular, N * t unitary assemblies, where N is the production speed of the line 1 in terms of containers per minute and t is the time - in minutes - to fill the individual container C with the predetermined volume of fluid), by distributing them over an ample surface or making them travel tortuous and/or lengthened paths in order to make them remain in the buffer station 110 for the length of time necessary for the containers C of the unitary assemblies to be filled with the respective predetermined volume of fluid.

The accumulator tables or the accumulator conveyors are per se known, for example from the US patent 5,282,525 or from the EP patent 1144285.

The unitary assemblies 4, 4' arrive at the buffer station 110 preferably continuously, in a neat row and optionally mutually spaced apart with the same pitch as that between the grip means 122, 132, 142 of the carousels and between the receptacles of the transfer starwheels 101-106.

The buffer station 110 is suitable to advance the unitary assemblies 4 or 4' arriving from the feeding conveyor 107 toward the unloading conveyor 108, at a speed and on a path length defined by the time (t) necessary to fill the individual container C with the predetermined volume of fluid. Such incoming unitary assemblies 4 or 4' each comprise the filling unit 2 or 2' substantially filled with the predetermined volume of fluid and the container C not yet filled with such volume.

With the pressure exerted by the gas inside the second chamber 21b or 21b', the volume of fluid is slowly transferred to the container C of the unitary assembly 4, 4' which can continue to remain on the accumulator table for the entire time necessary to complete the transfer of the volume of fluid from the filling unit 2, 2' to the container C of the unitary assembly 4, 4'.

By virtue of the buffer station 110, the production assembly 100 can operate at high production speeds N (for example, between 100 and 600 containers C per minute), by being able to rapidly fill the filling units 2 or 2' with a carousel 13 that has a limited number of grip means 132 and filling nozzles (for example, in the order of a few multiples of ten, for example between 30 and 60). At the buffer station 110, each filling unit 2 or 2' will then autonomously fill, in the (longer) time t required by the internal characteristics of the container C and/or by the nature of the fluid, the respective container C of the unitary assembly 4 or 4', by transferring to the container C over time t (for example 10 minutes) the predetermined volume of fluid that the filling unit 2 or 2' had received in a much shorter time (for example 5 seconds) from the filling station 13 of the production assembly 100. The filling station 13 can therefore have a relatively small number of filling nozzles and faucets (for example between 30 and 60 on the carousel 130).

The operation of the invention is evident from the foregoing description.

The containers C are transported in series along the first conveyance path P1 between the inlet 10 and the outlet 11 of the production assembly 100, at a certain desired (high) production rate N corresponding to the rate of the production line in which the filling line 1 is inserted. For example, the speed N with which the filled containers C' exit from the outlet 11 of the production assembly 100 is a few hundred containers per minute (for example, between 100 and 600 per minute).

Along their conveyance path P1, the containers are fixed to respective "mobile faucets" represented by the filling units 2 or 2' which were previously filled at speed N, in the filling station 13, with the volume of fluid required to fill the container C and which are pressurized in the coupling station 14.

In particular, in the filling station 13 the filling units 2, 2' are grasped by respective grip means 132 of the filling carousel 130 and brought to a respective filling nozzle 135, which is coupled to the opening 20, 20' of the reservoir 21, 21'.

During the rotation of the filling carousel 130, in the first embodiment the fluid injected into the reservoir 21 from the opening of the faucet 134 of the nozzle 135 lifts the piston 23 up to a height determined by the quantity of fluid injected, which is determined on the basis of the predetermined quantity required in order to fill the container C. In the example shown in the drawings, the quantity of fluid is the maximum permitted, and filling the first volume 21a of the reservoir 21 consequently lifts the piston 23 up to the stroke limit.

Subsequently, each filling unit 2 is transferred to the coupling carousel 140 (through the intermediate starwheel 103) where it is coupled to a respective puck 3, in order to form the unitary assembly 4, and to a respective pressurization needle 144, which injects the gas (air) under pressure into the second chamber 21b. The gas under pressure begins to make the piston 23 descend and to transfer the fluid into the container C. The vacuum generation means 145 (if any) can evacuate the air moved by the filling fluid from inside the container C.

In the second embodiment, during the rotation of the filling carousel 130, the stem 22' of the filling unit 2' is lifted by the lifting means 51 so as to clear the opening 20'. The fluid injected into the reservoir 21' by the opening of the faucet 134 of the nozzle 135 passes through the opening 20' and lifts the first piston 23' up to a height determined by the predetermined quantity of the fluid injected. In the example shown in the drawings, the predetermined quantity of fluid is the maximum permitted, and filling the first volume 21a' of the reservoir 21' consequently lifts the piston 23' up to the stroke limit, i.e. in abutment against the second piston 29'. The second chamber 21b' can optionally be vented in the filling station 130 using a vertically-moving venting needle 133, which is integral in rotation (about the central axis 131) with the grip means 132 and which acts on the one-way valve 28'.

Before the filling unit 2' is released from the filling carousel 130, the stem 22' disengages from the lifting means 51 and the first contrast spring 220 makes the stem 22' return to the position in which it shuts off the opening 20'. The venting valve 136 sucks away any excess filling fluid accumulated between the plugging end 22a' and the filling nozzle 135.

Subsequently each filling unit 2' is transferred to a respective grip means 142 of the coupling carousel 140 (through the intermediate starwheel 103) and is fixed to a respective puck 3' originating from the conveyor 10a and coupled to the suction nozzle 145, in order to form the unitary assembly 4'.

Advantageously, during the first segment of rotation of the unitary assembly 4' about the central axis 141 of the filling carousel and before the activation of the vacuum generation means 145, the mechanical lifting element 52 takes the reservoir 21' away from the container C of the unitary assembly 4', while the guide body 24' is kept fixed, gas-tight, on the puck 3' by means of the fixing means 27. In this manner the vacuum is created both in the container C and in the interspace 39' which is thus created between the container C and the reservoir 21'.

The tubular projection 210 is subsequently decoupled from the lifting element 52 and the second spring 213 makes the reservoir 21' return to a position in abutment against the container C, in which the spout 20a' of the opening 20' is coupled to the inlet 30 of the container C.

Subsequently the gas under pressure is introduced which, through the pressurization needle 144 and the channels 25' and 251, begins to fill the second chamber 21b' with gas (air) under pressure. The gas injected into the second chamber 21b' initially begins to push the second piston 29' away from the first piston 23', lifting the stem 22' as a consequence and so clearing the opening 20' for the consequent outflow of fluid from the reservoir 21' to the container C. The expansion of the gas continues after the unitary assembly 4' is uncoupled from the respective pressurization needle 144 and is released, from the coupling carousel 140, onto the feeding conveyor 107 through the first unloading starwheel 105, and the expansion continues for the duration of the stay of the unitary assembly 4' at the buffer station 110, making the first piston 23' move toward the bottom of the reservoir 21' which has the opening 20'.

In both embodiments of the filling kit illustrated, the container C then continues its journey along the path P1, again at the production speed N of the assembly 100, while the filling unit 2 or 2' coupled thereto fills it completely with the fluid by virtue of the expansion of the gas under pressure inside the second chamber 21b, 21b'. The container C remains at the buffer station 110 for the predetermined time required for it to be filled, for example at least 2 minutes. Optionally the time t to fill the container C can also comprise, in addition to the time it remains in transit in the buffer station 110, the time to convey the unitary assembly 4, 4' along the segments of the conveyors 107 and 108, along which the filling can respectively begin and continue.

When the unitary assemblies 4, 4' arrive at the outlet of the buffer station 110, for example when they are on the unloading conveyor 108, the respective container C has been completely filled with the predetermined volume of fluid. The unloading conveyor 108 advances the unitary assemblies 4, 4' at the high production speed required by the production assembly 100. At the separation station 12, after having optionally vented the gas through the valve 28, 28', the driving slider 274 is activated mechanically so as to separate the emptied filling unit 2, 2' from the filled container C, and each filled container is brought by the respective grip means 122 (for example, lower) of the separation carousel 120 to the second unloading starwheel 104, which conveys them to the unloading conveyor 11a.

The filling units 2 or 2' are then made to recirculate continuously in the filling line 1 along the closed path P2, along a segment of which they are once again rendered temporarily integral with a respective container C (so forming respective independent unitary assemblies 4 or 4') in order to be able to fill it, mainly at the buffer station 110, in a time t (which may be long) longer than that necessary to fill said filling units with the same volume of fluid in order to ensure a preset production rate N of filled containers C in output from the line 1.

Therefore it has been found that the invention fully achieves the intended aim and objects.

The invention thus conceived is susceptible of numerous modifications and variations, all of which are within the scope of the appended claims.

In practice, the materials used, as well as the contingent shapes and dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for filling containers (C) with a fluid in a filling line in which the containers (C) are conveyed in series along a first conveyance path (P1) between an inlet (10) for the empty containers (C) and an outlet (11) for the filled containers (C), comprising the steps of:
- conveying along a second conveyance path (P2) a series of filling units (2, 2'), said first and second paths (P1, P2) being at least partially mutually superimposed;
- along a portion of said second path (P2), filling each filling unit (2, 2') with said predetermined volume of fluid;
- along a superimposed segment between said first and second conveyance paths (P1, P2), rendering each filling unit (2) temporarily integral with a respective one of said containers (C), so as to form a unitary assembly (4, 4') in which the filling unit (2, 2') and the respective container (C) are in fluid communication;
said method being **characterized in that** it further comprises the steps of:
- accumulating the unitary assemblies (4, 4') in a buffer station (110) in which the filling units (2, 2') transfer said volume of fluid to said container (C);
- at the end of the transfer of said volume of fluid, separating the containers (C) thus filled from the filling units (2, 2') thus emptied and conveying toward said outlet (11) said containers thus filled.

2. The method according to the preceding claim, wherein said second conveyance path (P2) is a closed path, in said filling step the filling units (2, 2') that are filled with said volume of fluid being the ones that were previously separated from the unitary assemblies (4, 4') in said separating step.

3. The method according to one or more of the preceding claims, wherein the time for filling each filling unit (2, 2') with said volume of fluid is shorter than the time (t) for transferring said volume of fluid from the filling unit (2, 2') to the container (C).

4. The method according to one or more of the preceding claims, wherein said first and second conveyance paths (P1, P2) pass through in succession at least one separation station (12) for separating the filling units (2, 2') from the containers (C) of the unitary assemblies (4, 4'), a filling station (13) for filling said filling units (2, 2'), a coupling station (14) for coupling the filling units (2, 2') with the containers (C) and said buffer station (110), said separation, filling and coupling stations (12, 13, 14) comprising respectively at least one separation carousel (120), at least one filling carousel (130) and at least one coupling carousel (140), each one of said carousels (120, 130, 140) rotating, preferably with continuous motion, about a respective central rotation axis (121, 131, 141) and being provided with a plurality of grip means (122, 132, 142) which are angularly mutually equidistant around the central rotation axis (121, 131, 141).

5. The method according to one or more of the preceding claims, wherein at least one of said filling unit (2, 2') and said container (C), or a puck (3, 3') suitable to contain said container (C), comprises means for removably fixing (27) which can be activated on command, said step of rendering temporarily integral comprising a step of mutual approach between the filling unit (2, 2') and the container (C) and an activation of said means for removably fixing (27) so that the container (C) becomes integral with the filling unit (2, 2').

6. The method according to one or more of the preceding claims, wherein said containers (C) along said first path (P1) are accommodated in a respective puck (3, 3'), said step of rendering temporarily integral comprising a direct coupling between said puck (3, 3') and means for removably fixing (27) which are associated with either said filling unit (2, 2') or said puck (3, 3').

7. The method according to one or more of the preceding claims, wherein said step of rendering temporarily integral the filling unit (2, 2') and the container (C) comprises:
- a step of airtight fixing between said filling unit (2, 2') and a puck (3, 3') which contains said container (C); and
- a step of creating a vacuum in said container (C) by aspirating air from said puck (3, 3').

8. The method according to one or more of the preceding claims, wherein the fluid used for filling is an electrolyte for batteries.

9. The method according to one or more of the preceding claims, wherein the containers (C) are containers for batteries which accommodate internally sheets of anode and of cathode and optionally other materials and components.

10. A filling line (1) for performing the method according to one or more of the preceding claims, comprising an inlet (10) for empty containers (C), an outlet (11) for the filled containers (C), and a first conveyance path (P1) for the containers between said inlet (10) and said outlet (11), the filling line (1) comprising:
- a second conveyance path (P2) for a series of filling units (2), said first and second paths (P1, P2) being at least partially mutually superimposed;
- a separation station (12), a filling station (13) for filling said filling units (2) downstream of said separation station (12), a coupling station (14) downstream of said filling station (13) and a buffer station (110) between said coupling station (14) and said separation station (12), said stations (12, 13, 14, 110) being passed through by at least said second conveyance path (P2), the first and second conveyance paths (P1, P2) being mutually superimposed at least at said coupling station (14) and at said buffer station (110);
- at said filling station (13), means (135) for introducing a predetermined volume of a fluid to be injected into said containers (C) into each one of said filling units (2, 2');
- said coupling station (14) being suitable to couple to each one of said containers (C) a respective one of said filling units (2, 2') that arrive from said filling station (13), so as to form a unitary assembly (4, 4') in which the filling unit (2, 2') and the respective container (C) are in fluid communication;
- said line (1) comprising actuation means (23, 23') for actuating the filled filling units (2, 2') of said unitary assemblies (4, 4') in order to transfer, at said buffer station (110), said volume of fluid from the filling unit (2, 2') to the container (C) of the respective unitary assembly (4, 4'), which at the end of the transfer will be composed of the emptied filling unit (2, 2') and by the filled container (C);
- said separation station (12) being suitable to disassemble said unitary assemblies (4, 4') that exit, or come, from the buffer station (110), separating the emptied filling units (2) of each unitary assembly (4) from the respective filled containers (C).

11. The filling line according to the preceding claim, wherein said second conveyance path (P2) is a closed path, so that the filling units (2, 2') that are filled with said volume of fluid in the filling station (13) are the ones that arrive from the buffer station (110) through the separation station (12).

12. The filling line according to one or more of claims 10-11, wherein said separation, filling and coupling stations (12, 13, 14) comprise respectively at least one separation carousel (120), at least one filling carousel (130) and at least one coupling carousel (140), each one of said carousels (120, 130, 140) being able to rotate, preferably with continuous motion, about a respective central rotation axis (121, 131, 141) and being provided with a plurality of grip means (122, 132, 142) which are angularly mutually equidistant around the central rotation axis, said first and second conveyance paths (P1, P2) comprising arcs of circles traced by the rotations of said grip means (122, 142) at least of the separation (120) and coupling (140) carousels about the respective central rotation axes (121, 141) of said carousels.

13. The filling line according to one or more of claims 10-12, wherein at least one from among said filling unit (2) and said container (C), or a puck (3, 3') suitable to contain the container (C), comprises means for removably fixing (27) which can be activated on command, said coupling station (14) being suitable to activate said means for removably fixing (27) so that the container (C) becomes integral with the respective filling unit (2, 2') so as to form said unitary assembly (4, 4').

14. Filling line according to the preceding claim, wherein said first path (P1) is configured so that said containers (C) can be accommodated in a respective puck (3, 3'), said means for removably fixing (27) being suitable to generate a snap-fit coupling between said puck (3, 3') and said filling unit (2, 2') of said unitary assembly.

15. The filling line according to one or more of claims 10-14, wherein each one of said filling units (2, 2') comprises a syringe-like body which comprises a reservoir (21, 21') provided with an opening (20, 20') for the passage of the fluid and at least one first piston (23, 23') which can move inside the reservoir (21, 21') and which separates said reservoir (21, 21') into a first chamber (21a, 21a') suitable to contain the predetermined volume of the fluid and a second chamber (21b, 21b') suitable to contain a gas under pressure which is suitable to move, by means of an expansion of the gas, said first piston (23, 23') toward said opening (20, 20').

16. A filling kit for a filling line according to one or more of claims 10-15, comprising:
- a puck (3, 3') adapted to contain a container (C) to be filled with a predetermined volume of fluid;
- a filling unit (2, 2'), which has a reservoir (21, 21'), adapted to contain in a first chamber (21a, 21a') thereof said predetermined volume of fluid, and a first piston (23, 23'), which can move within the reservoir (21, 21') and which is adapted to expel said fluid from said first chamber (21a) through an opening (20, 20') of said reservoir (21, 21');
- means for removably fixing (27) which are suitable to render mutually integral said filling unit (2, 2') and said puck (3, 3').

## Patentansprüche

1. Ein Verfahren zum Füllen von Behältern (C) mit einem Fluid in einer Fülllinie, in welcher die Behälter (C) in Reihe entlang einem ersten Transportweg (P1) zwischen einem Einlass (10) für die leeren Behälter (C) und einem Auslass (11) für die gefüllten Behälter (C) befördert werden; folgende Schritte umfassend:
- das Befördern einer Reihe von Fülleinheiten (2, 2') entlang einem zweiten Transportweg (P2), wobei der erste und der zweite Weg (P1, P2) einander zumindest teilweise überlagern;
- entlang einem Abschnitt des zweiten Wegs (P2), das Füllen jeder Fülleinheit (2, 2') mit dem vordefinierten Volumen des Fluids;
- entlang einem überlagerten Segment zwischen dem ersten und dem zweiten Transportweg (P1, P2), das vorübergehende Vereinigen jeder Fülleinheit (2) mit einem entsprechenden der Behälter (C), um einen Einheitsaufbau (4, 4') zu bilden, in dem die Fülleinheit (2, 2') und der jeweilige Behälter (C) in Fluidaustausch stehen;
wobei das Verfahren **dadurch gekennzeichnet ist, dass** es weiter folgende Schritte umfasst:
- das Sammeln der Einheitsaufbauten (4, 4') in einer Pufferstation (110), in der die Fülleinheiten (2, 2') das Fluidvolumen an den Behälter (C) übertragen;
- am Ende der Übertragung des Fluidvolumens, das Trennen der so gefüllten Behälter (C) von den so geleerten Fülleinheiten (2, 2') und das Befördern der so gefüllten Behälter zu dem Auslass (11).

2. Das Verfahren gemäß dem obigen Anspruch, worin der zweite Transportweg (P2) ein geschlossener Weg ist, wobei in dem Füllschritt die Fülleinheiten (2, 2'), die mit dem Volumen des Fluids gefüllt werden, diejenigen sind, die zuvor in dem Trennschritt von den Einheitsaufbauten (4, 4') getrennt wurden.

3. Das Verfahren gemäß einem oder mehreren der obigen Ansprüche, worin die Zeit zum Füllen jeder Fülleinheit (2, 2') mit dem Volumen des Fluids kürzer ist als die Zeit (t) zum Übertragen des Fluidvolumens von der Fülleinheit (2, 2') an den Behälter (C).

4. Das Verfahren gemäß einem oder mehreren der obigen Ansprüche, worin die ersten und zweiten Transportwege (P1, P2) hintereinander verlaufen durch: mindestens eine Trennstation (12) zum Trennen der Fülleinheiten (2, 2') von den Behältern (C) der Einheitsaufbauten (4, 4'), eine Füllstation (13) zum Füllen der Fülleinheiten (2, 2'), eine Kopplungsstation (14) zum Koppeln der Fülleinheiten (2, 2') mit den Behältern (C) und der Pufferstation (110), wobei die Trenn-, Füll- und Kopplungsstationen (12, 13, 14) mindestens ein Trennkarussell (120), mindestens ein Füllkarussell (130) und mindestens ein Kopplungskarussell (140) umfassen, wobei sich jedes der Karussells (120, 130, 140), vorzugsweise mit durchgehender Bewegung, um eine jeweilige zentrale Drehachse (121, 131, 141) dreht und mit einer Vielzahl von Greifmitteln (122, 132, 142) ausgestattet ist, die winklig äquidistant voneinander um die zentrale Drehachse (121, 131, 141) sind.

5. Das Verfahren gemäß einem oder mehreren der obigen Ansprüche, worin mindestens eines der Fülleinheit (2, 2') und des Behälters (C) oder eine Andruckrolle (3, 3'), die geeignet ist, den Behälter (C) aufzunehmen, Mittel (27) zur lösbaren Befestigung umfasst, die auf Befehl aktiviert werden können; wobei der Schritt des vorübergehenden Vereinigens einen Schritt der gegenseitigen Annäherung der Fülleinheit (2, 2') und des Behälters (C) und eine Aktivierung der Mittel (27) zur lösbaren Befestigung, so dass der Behälter (C) mit der Fülleinheit (2, 2') integral wird, umfasst.

6. Das Verfahren gemäß einem oder mehreren der obigen Ansprüche, worin die Behälter (C) entlang dem ersten Weg (P1) in einer entsprechenden Andruckrolle (3, 3') untergebracht sind, wobei der Schritt des vorübergehenden Vereinigens eine direkte Kopplung zwischen der Andruckrolle (3, 3') und Mitteln (27) zur lösbaren Befestigung (27) umfasst, die entweder mit der Fülleinheit (2, 2') oder der Andruckrolle (3, 3') verbunden sind.

7. Das Verfahren gemäß einem oder mehreren der obigen Ansprüche, worin der Schritt des vorübergehenden Vereinigens der Fülleinheit (2, 2') und des Behälters (C) Folgendes umfasst:
- einen Schritt der luftdichten Fixierung zwischen der Fülleinheit (2, 2') und einer Andruckrolle (3, 3')*,* die den Behälter (C) enthält; und
- einen Schritt des Erzeugens eines Vakuums in dem Behälter (C) durch Ansaugen von Luft aus der Andruckrolle (3, 3').

8. Das Verfahren gemäß einem oder mehreren der obigen Ansprüche, worin das zum Füllen verwendete Fluid ein Elektrolyt für Batterien ist.

9. Das Verfahren gemäß einem oder mehreren der obigen Ansprüche, worin die Behälter (C) Behälter für Batterien sind, die innen Anoden- und Kathodenplättchen und wahlweise andere Materialien und Komponenten enthalten.

10. Eine Fülllinie (1) zum Durchführen des Verfahrens gemäß einem oder mehreren der obigen Ansprüche, die einen Einlass (10) für leere Behälter (C), einen Auslass (11) für die gefüllten Behälter (C) und einen ersten Transportweg (P1) für die Behälter zwischen dem Einlass (10) und dem Auslass (11) umfasst, wobei die Fülllinie (1) Folgendes umfasst:
- einen zweiten Transportweg (P2) für eine Reihe von Fülleinheiten (2), wobei der erste und der zweite Weg (P1, P2) sich zumindest teilweise überlagern;
- eine Trennstation (12), eine Füllstation (13) zum Füllen der Fülleinheiten (2) stromabwärts von der Trennstation (12), eine Kopplungsstation (14) stromabwärts von der Füllstation (13) und eine Pufferstation (110) zwischen der Kopplungsstation (14) und der Trennstation (12), wobei die Stationen (12, 13, 14, 110) zumindest von dem zweiten Transportweg (P2) durchquert werden, wobei der erste und der zweite Transportweg (P1, P2) sich mindestens an der Kopplungsstation (14) und an der Pufferstation (110) überlagern;
- an der Füllstation (13), Mittel (135) zum Einführen eines vordefinierten Volumens eines Fluids, das in die Behälter (C) eingespritzt werden soll, in jede der Fülleinheiten (2, 2');
- wobei die Kopplungsstation (14) geeignet ist, mit jedem der Behälter (C) eine entsprechende der Fülleinheiten (2, 2') zu koppeln, die von der Füllstation (13) kommen, um einen Einheitsaufbau (4, 4') zu bilden, in welchem die Fülleinheit (2, 2') und der entsprechende Behälter (C) in Fluidaustausch stehen;
- wobei die Linie (1) Antriebsmittel (23, 23') umfasst, um die gefüllten Fülleinheiten (2, 2') der Einheitsaufbauten (4, 4') anzutreiben, um an der Pufferstation (110) das Fluidvolumen von der Fülleinheit (2, 2') an den Behälter (C) des entsprechenden Einheitsaufbaus (4, 4') zu übertragen, der am Ende des Transfers aus der geleerten Fülleinheit (2, 2') und dem gefüllten Behälter (C) bestehen wird;
- wobei die Trennstation (12) geeignet ist, die Einheitsaufbauten (4, 4') zu demontieren, die von der Pufferstation (110) kommen oder aus ihr austreten, wobei die geleerten Fülleinheiten (2) jedes Einheitsaufbaus (4) von den jeweiligen gefüllten Behältern (C) getrennt werden.

11. Die Fülllinie gemäß dem obigen Anspruch, worin der zweite Transportweg (P2) ein geschlossener Pfad ist, so dass die Fülleinheiten (2, 2'), die mit dem Fluidvolumen in der Füllstation (13) gefüllt sind, diejenigen sind, die von der Pufferstation (110) durch die Trennstation (12) kommen.

12. Die Fülllinie gemäß einem oder mehreren der Ansprüche 10-11, worin die Trenn-, Füll- und Kopplungsstationen (12, 13, 14) mindestens ein Trennkarussell (120), mindestens ein Füllkarussell (130) beziehungsweise mindestens ein Kopplungskarussell (140) umfassen, wobei sich jedes der Karussells (120, 130, 140), vorzugsweise mit durchgehender Bewegung, um eine jeweilige zentrale Drehachse (121, 131, 141) drehen kann und mit einer Vielzahl von Greifmitteln (122, 132, 142) ausgestattet ist, die winklig äquidistant voneinander um die zentrale Drehachse sind, wobei der erste und der zweite Transportweg (P1, P2) Kreisbögen umfassen, die durch die Drehungen der Greifmittel (122, 142) zumindest der Trenn- (120) und der Kopplungskarussells (140) um die jeweiligen zentralen Drehachsen (121, 141) der Karussells beschrieben werden.

13. Die Fülllinie gemäß einem oder mehreren der Ansprüche 10-12, wobei mindestens eines der Fülleinheit (2) und des Behälters (C) oder eine Andruckrolle (3, 3'), die geeignet ist, den Behälter (C) aufzunehmen, Mittel (27) zur lösbaren Befestigung umfasst, die auf Befehl aktiviert werden können; wobei die Kopplungsstation (14) geeignet ist, die Mittel (27) zur lösbaren Befestigung zu aktivieren, so dass der Behälter (C) mit der jeweiligen Fülleinheit (2, 2') integral wird, um so den Einheitsaufbau (4, 4') zu bilden.

14. Fülllinie gemäß dem obigen Anspruch, worin der erste Weg (P1) so konfiguriert ist, dass die Behälter (C) einer entsprechenden Andruckrolle (3, 3') aufgenommen werden können, wobei die Mittel (27) zur lösbaren Befestigung geeignet sind, eine Schnappverbindung zwischen der Andruckrolle (3, 3') und der Fülleinheit (2, 2') des Einheitsaufbaus herzustellen.

15. Die Fülllinie gemäß einem oder mehreren der Ansprüche 10-14, wobei jede der Fülleinheiten (2, 2') einen spritzenartigen Körper umfasst, der einen Behälter (21, 21') umfasst, versehen mit einer Öffnung (20, 20') für den Durchfluss des Fluids und mindestens einem ersten Kolben (23, 23'), der sich in dem Behälter (21, 21') bewegen kann und der den Behälter (21, 21') in eine erste Kammer (21a, 21a'), die geeignet ist, das vordefinierte Fluidvolumen aufzunehmen, und eine zweite Kammer (21b, 21b') unterteilt, die geeignet ist, ein Druckgas aufzunehmen, das geeignet ist, mittels einer Expansion des Gases den ersten Kolben (23, 23') zu der Öffnung (20, 20') hin zu bewegen.

16. Ein Füllkit für eine Fülllinie gemäß einem oder mehreren der Ansprüche 10-15, das Folgendes umfasst:
- eine Andruckrolle (3, 3'), ausgebildet, um einen Behälter (C) aufzunehmen, der mit einem vordefinierten Fluidvolumen gefüllt werden soll;
- eine Fülleinheit (2, 2'), die einen Behälter (21, 21') hat, ausgebildet, um in einer ersten Kammer (21a, 21a') desselben das vordefinierte Fluidvolumen aufzunehmen, und einen ersten Kolben (23, 23'), der sich in dem Behälter (21, 21') bewegen kann und ausgebildet ist, um das Fluid durch eine Öffnung (20, 20') in dem Behälter (21, 21') aus der ersten Kammer (21a) auszustoßen;
- Mittel (27) zur lösbaren Befestigung, die geeignet sind, die Fülleinheit (2, 2') und die Andruckrolle (3, 3') miteinander integral zu machen.

## Revendications

1. Procédé de remplissage de contenants (C) avec un fluide dans une conduite de remplissage, dans lequel les contenants (C) sont acheminés en série le long d'un premier parcours de transport (P1) entre une entrée (10) destinée aux contenants vides (C) et une sortie (11) destinée aux contenants remplis (C), comprenant les étapes suivantes :
- le transport, le long d'un deuxième parcours de transport (P2), d'une série d'unités de remplissage (2, 2'), lesdits premier et deuxième parcours (P1, P2) se superposant au moins partiellement l'un à l'autre ;
- le long d'une portion dudit deuxième parcours (P2), le remplissage de chaque unité de remplissage (2, 2') avec ledit volume prédéterminé de fluide ;
- le long d'un segment de superposition entre lesdits premier et deuxième parcours de transport (P1, P2), rendre chaque unité de remplissage (2) temporairement solidaire d'un desdits contenants (C) respectifs, de manière à former un ensemble unitaire (4, 4') dans lequel l'unité de remplissage (2, 2') et le contenant (C) respectif sont en communication fluidique ;
ledit procédé étant **caractérisé en ce qu'**il comprend en outre les étapes suivantes :
- accumuler les ensembles unitaires (4, 4') dans une station tampon (110) dans laquelle les unités de remplissage (2, 2') transfèrent ledit volume de fluide vers ledit contenant (C) ;
- à la fin du transfert dudit volume de fluide, séparer les contenants (C) ainsi remplis des unités de remplissage (2, 2') ainsi vidées et acheminer vers ladite sortie (11) lesdits contenants ainsi remplis.

2. Procédé selon la revendication précédente, où ledit deuxième parcours de transport (P2) est un parcours fermé, dans ladite étape de remplissage les unités de remplissage (2, 2') qui sont remplies dudit volume de fluide étant celles qui ont été préalablement séparées des ensembles unitaires (4, 4') lors de ladite étape de séparation.

3. Procédé selon une ou plusieurs des revendications précédentes, où le temps nécessaire pour remplir chaque unité de remplissage (2, 2') dudit volume de fluide est inférieur au temps (t) nécessaire pour transférer ledit volume de fluide de l'unité de remplissage (2, 2') vers le contenant (C).

4. Procédé selon une ou plusieurs des revendications précédentes, où lesdits premier et deuxième parcours de transport (P1, P2) passent successivement par au moins une station de séparation (12) destinée à séparer les unités de remplissage (2, 2') des contenants (C) des ensembles unitaires (4, 4'), une station de remplissage (13) destinée à remplir lesdites unités de remplissage (2, 2'), une station d'accouplement (14) destinée à accoupler les unités de remplissage (2, 2') aux contenants (C) et ladite station tampon (110), lesdites stations de séparation, de remplissage et d'accouplement (12, 13, 14) comprenant respectivement au moins un carrousel de séparation (120), au moins un carrousel de remplissage (130) et au moins un carrousel d'accouplement (140), chacun desdits carrousels (120, 130, 140) tournant, de préférence en mouvement continu, autour d'un axe de rotation central respectif (121, 131, 141) et étant pourvu d'une pluralité de moyens de préhension (122, 132, 142) qui sont angulairement équidistants les uns des autres autour de l'axe de rotation central (121, 131, 141).

5. Procédé selon l'une ou plusieurs des revendications précédentes, où au moins l'une parmi ladite unité de remplissage (2, 2') et ledit contenant (C), ou un disque (3, 3') adapté pour contenir ledit contenant (C), comprend des moyens de fixation amovible (27) pouvant être activés sur commande, ladite étape de rendre solidaires temporairement comprenant une étape de rapprochement mutuel entre l'unité de remplissage (2, 2') et le contenant (C), ainsi qu'une activation desdits moyens de fixation amovible (27) de sorte que le contenant (C) est rendu solidaire avec l'unité de remplissage (2, 2').

6. Procédé selon une ou plusieurs des revendications précédentes, où lesdits contenants (C) le long dudit premier parcours (P1) sont logés dans un disque respectif (3, 3'), ladite étape de rendre solidaires temporairement comprenant un couplage direct entre ledit disque (3, 3') et des moyens de fixation amovibles (27) qui sont associés soit à ladite unité de remplissage (2, 2'), soit audit disque (3, 3').

7. Procédé selon une ou plusieurs des revendications précédentes, où ladite étape consistant à rendre temporairement solidaires l'unité de remplissage (2, 2') et le contenant (C) comprend :
- une étape de fixation étanche à l'air entre ladite unité de remplissage (2, 2') et un disque (3, 3') qui contient ledit contenant (C) ; et
- une étape consistant à créer un vide dans ledit contenant (C) en aspirant l'air hors dudit disque (3, 3').

8. Procédé selon une ou plusieurs des revendications précédentes, où le fluide utilisé pour le remplissage est un électrolyte pour batteries.

9. Procédé selon une ou plusieurs des revendications précédentes, où les contenants (C) sont des contenants pour batteries qui logent à l'intérieur des feuilles d'anode et de cathode et, éventuellement, d'autres matériaux et composants.

10. Ligne de remplissage (1) destinée à mettre en œuvre le procédé selon l'une ou plusieurs des revendications précédentes, comprenant une entrée (10) pour les contenants vides (C), une sortie (11) pour les contenants remplis (C), et un premier parcours de transport (P1) pour les contenants entre ladite entrée (10) et ladite sortie (11),
la ligne de remplissage (1) comprenant :
- un deuxième parcours de transport (P2) pour une série d'unités de remplissage (2), lesdits premier et deuxième parcours (P1, P2) se superposant au moins partiellement l'un à l'autre ;
- une station de séparation (12), une station de remplissage (13) destinée à remplir lesdites unités de remplissage (2) en aval de ladite station de séparation (12), une station d'accouplement (14) en aval de ladite station de remplissage (13) et une station tampon (110) située entre ladite station d'accouplement (14) et ladite station de séparation (12), lesdites stations (12, 13, 14, 110) étant traversées par au moins ledit deuxième parcours de transport (P2), les premier et deuxième parcours de transport (P1, P2) se superposant mutuellement au moins au niveau de ladite station d'accouplement (14) et au niveau de ladite station tampon (110) ;
- au niveau de ladite station de remplissage (13), des moyens (135) destinés à introduire un volume prédéterminé d'un fluide à injecter dans lesdits contenants (C) dans chacune desdites unités de remplissage (2, 2') ;
- ladite station d'accouplement (14) étant adaptée pour raccorder à chacun desdits contenants (C) l'une respective desdites unités de remplissage (2, 2') provenant de ladite station de remplissage (13), de manière à former un ensemble unitaire (4, 4') dans lequel l'unité de remplissage (2, 2') et le contenant respectif (C) sont en communication fluidique ;
- ladite ligne (1) comprenant des moyens d'actionnement (23, 23') destinés à actionner les unités de remplissage remplies (2, 2') desdits ensembles unitaires (4, 4') afin de transférer, au niveau de ladite station tampon (110), ledit volume de fluide de l'unité de remplissage (2, 2') vers le contenant (C) de l'ensemble unitaire respectif (4, 4'), lequel, à l'issue du transfert, sera composé de l'unité de remplissage vidée (2, 2') et du contenant rempli (C) ;
- ladite station de séparation (12) étant adaptée pour démonter lesdits ensembles unitaires (4, 4') qui sortent de la station tampon (110), en séparant les unités de remplissage vidées (2) de chaque ensemble unitaire (4) des contenants remplis (C) respectifs.

11. Ligne de remplissage selon la revendication précédente, où ledit deuxième parcours de transport (P2) est un parcours fermé, de sorte que les unités de remplissage (2, 2') qui sont remplies dudit volume de fluide dans la station de remplissage (13) sont celles qui arrivent de la station tampon (110) en passant par la station de séparation (12).

12. Ligne de remplissage selon l'une ou plusieurs des revendications 10 à 11, où lesdites stations de séparation, de remplissage et d'accouplement (12, 13, 14) comprennent respectivement au moins un carrousel de séparation (120), au moins un carrousel de remplissage (130) et au moins un carrousel d'accouplement (140), chacun desdits carrousels (120, 130, 140) pouvant tourner, de préférence en mouvement continu, autour d'un axe de rotation central respectif (121, 131, 141) et étant pourvus d'une pluralité de moyens de préhension (122, 132, 142) qui sont angulairement équidistants les uns des autres autour de l'axe de rotation central, lesdits premier et deuxième parcours de transport (P1, P2) comprenant des arcs de cercle tracés par les rotations desdits moyens de préhension (122, 142) d'au moins les carrousels de séparation (120) et d'accouplement (140) autour des axes de rotation centraux respectifs (121, 141) desdits carrousels.

13. Ligne de remplissage selon l'une ou plusieurs des revendications 10 à 12, où au moins l'un parmi ladite unité de remplissage (2) et ledit contenant (C), ou un disque (3, 3') apte à contenir le contenant (C), comprend des moyens de fixation amovible (27) pouvant être activés sur commande, ladite station d'accouplement (14) étant apte à activer lesdits moyens de fixation amovible (27) de sorte que le contenant (C) est rendu solidaire avec l'unité de remplissage respective (2, 2') afin de former ledit ensemble unitaire (4, 4').

14. Ligne de remplissage selon la revendication précédente, où ledit premier parcours (P1) est configuré de telle sorte que lesdits contenants (C) puissent être logés dans un disque respectif (3, 3'), lesdits moyens de fixation amovible (27) étant adaptés pour générer un couplage par encliquetage entre ledit disque (3, 3') et ladite unité de remplissage (2, 2') dudit ensemble unitaire.

15. Ligne de remplissage selon une ou plusieurs des revendications 10 à 14, où chacune desdites unités de remplissage (2, 2') comprend un corps de type seringue qui comprend un réservoir (21, 21') muni d'une ouverture (20, 20') pour le passage du fluide et d'au moins un premier piston (23, 23') pouvant se déplacer à l'intérieur du réservoir (21, 21') et qui sépare ledit réservoir (21, 21') en une première chambre (21a, 21a') apte à contenir le volume prédéterminé de fluide et une deuxième chambre (21b, 21b') apte à contenir un gaz sous pression, ce gaz étant apte à déplacer, par expansion, ledit premier piston (23, 23') vers ladite ouverture (20, 20').

16. Kit de remplissage pour une ligne de remplissage selon l'une ou plusieurs des revendications 10 à 15, comprenant :
- un disque (3, 3') adapté pour recevoir un contenant (C) destiné à être rempli d'un volume prédéterminé de fluide ;
- une unité de remplissage (2, 2'), qui comporte un réservoir (21, 21'), adapté pour contenir dans une première chambre (21a, 21a') dudit réservoir ledit volume prédéterminé de fluide, et un premier piston (23, 23'), qui peut se déplacer à l'intérieur du réservoir (21, 21') et qui est adapté pour expulser ledit fluide de ladite première chambre (21a) à travers une ouverture (20, 20') dudit réservoir (21, 21') ;
- des moyens de fixation amovible (27) adaptés pour rendre solidaires ladite unité de remplissage (2, 2') et ledit disque (3, 3').
